# EUROPÄISCHE PATENTSCHRIFT

(11) **EP 3 600 766 B1**
(45) Veröffentlichungstag und Bekanntmachung des Hinweises auf die Patenterteilung: **14.02.2024**
(21) Anmeldenummer: 17717101.4
(22) Anmeldetag: 31.03.2017
(51) Int. Cl.: B24C 7/00, B24C 1/04

(54) **WASSER-ABRASIV-SUSPENSIONS-SCHNEIDANLAGE**
WATER-ABRASIVE-SUSPENSION CUTTING SYSTEM
INSTALLATION DE DÉCOUPE PAR JET D'EAU CHARGÉE D'ABRASIF EN SUSPENSION

(43) Veröffentlichungstag der Anmeldung: 05.02.2020
(73) Patentinhaber: ANT Applied New Technologies AG, 23560 Lübeck (DE)
(72) Erfinder: LINDE, Marco, 23562 Lübeck (DE)
(74) Vertreter: Patentanwälte Hemmer Lindfeld Frese Partnerschaft mbB
(86) Internationale Anmeldenummer: PCT/EP2017/057783
(87) Internationale Veröffentlichungsnummer: WO 2018/177556

(56) Entgegenhaltungen:
- EP-A1- 1 859 901
- EP-B1- 0 276 219
- EP-B1- 2 755 802
- WO-A1-2010/115624
- WO-A1-2015/149867
- DE-A1-102011 101 074
- DE-T2- 69 722 383
- US-A- 4 262 688
- US-A- 5 722 801
- US-A1- 2016 339 560

## Beschreibung

Die vorliegende Offenbarung betrifft eine Wasser-Abrasiv-Suspensions-Schneidanlage mit den im Oberbegriff des Anspruchs 1 angegebenen Merkmalen. Eine derartige Anlage ist aus dem Dokument EP 2 755 802 B1 bekannt.

Wasser-Abrasiv-Suspensions-Schneidanlagen werden zum Schneiden von Materialien mittels eines Hochdruck-Wasserstrahls verwendet, welchem ein Abrasivmittel zugesetzt ist. Wasser-Abrasiv-Suspensions-Schneidanlagen sind zu unterscheiden von Wasser-Abrasiv-Injektions-Schneidanlagen, bei denen das Abrasivmittel erst in oder an einer Austrittsdüse in das bereits sehr stark beschleunigte Wasser eingeführt wird. Bei Wasser-Abrasiv-Suspensions-Schneidanlagen wird zunächst das unter Hochdruck stehende Wasser mit dem Abrasivmittel gemischt und dann die Wasser-Abrasivmittel-Suspension in der Austrittsdüse beschleunigt. Bei Wasser-Abrasiv-Injektions-Schneidanlagen besteht zwar nicht das Problem, das Abrasivmittel unter Hochdruck mit dem Wasser zu mischen, da das Abrasivmittel erst an der Austrittsdüse zugeführt wird, allerdings ist das Abrasivmittel-Wasser-Verhältnis bei Wasser-Abrasiv-Injektions-Schneidanlagen stark beschränkt und damit dessen Schneidkraft. Außerdem führen Lufteinschlüsse bei Wasser-Abrasiv-Injektions-Schneidanlagen zur Schneidleistungsminderung durch uneffektives Beschleunigen der Abrasivmittelpartikel beim Einsaugen in den Wasserstrahl sowie hohe Luftanteile im Schneidstrahl. Bei Wasser-Abrasiv-Suspensions-Schneidanlagen hingegen kann das Abrasivmittel-Wasser-Verhältnis höher gewählt und eine höhere Schneidkraft erzielt werden, da das Wasser unter Hochdruck stromaufwärts der Austrittsdrüse ohne Lufteinschlüsse mit dem Abrasivmittel gesteuert gemischt wird. So kann beispielsweise ein Teil des Wasserstroms durch einen Abrasivmittelbehälter geführt werden, welcher als Druckbehälter ausgebildet ist. Eine solche Anlage ist z. B. aus der EP 1 199 136 bekannt. Eine technische Herausforderung bei diesen Anlagen ist das Nachfüllen des Abrasivmittels, da dazu die Anlage außer Betrieb genommen werden muss, der Abrasivmittelbehälter in einen drucklosen Zustand gebracht werden muss und erst dann befüllt werden kann. Bei industriellen Anwendungen ist jedoch oft ein kontiniuierliches Schneiden erwünscht, bei dem die Anlage für das Befüllen des Abrasivmittels nicht außer Betrieb genommen werden muss.

Die EP 2 755 802 B1 und WO 2015/149867 A1 beschreiben Schleusenlösungen, um einen kontinuierlichen Betrieb der Anlage sicherzustellen. Wegen der besonders hohen Drücke von teilweise über 2.000 bar ist das zuverlässige Öffnen und Schließen solcher Schleusenlösungen allerdings eine technische Herausforderung. Das Abrasivmittel kann zudem Schleusenventile verstopfen und/oder blockieren.

Die hierin offenbarte Wasser-Abrasiv-Suspensions-Schneidanlage gemäß Anspruch 1 hat gegenüber den vorgenannten Lösungen den Vorteil, dass die Schleusenventile nicht verstopfen oder blockieren und sich zuverlässig öffnen und schließen lassen, um einen kontinuierlichen Betrieb der Anlage sicherzustellen. Vorteilhafte Ausgestaltungen der Offenbarung sind in den Unteransprüchen, der nachfolgenden Beschreibung und den Zeichnungen angegeben.

Die hierin offenbarte Wasser-Abrasiv-Suspensions-Schneidanlage weist einen Druckbehälter zum Bereitstellen einer unter Druck stehenden Wasser-Abrasivmittel-Suspension, eine Schleusenkammer, und ein Nachfüllventil zum Nachfüllen von Abrasivmittel über die Schleusenkammer in den Druckbehälter auf. Das Nachfüllventil weist dabei einen Ventileingang, einen Ventilausgang, einen zwischen dem Ventileingang und dem Ventilausgang angeordneten Ventilraum und einem in dem Ventilraum befindlichen Ventilkörper auf, wobei der Ventileingang mit der Schleusenkammer und der Ventilausgang mit dem Druckbehälter verbunden ist.

Das zuverlässige Öffnen und Schließen des Nachfüllventils wird nun durch mehrere Aspekte dieser Offenbarung gewährleistet, die jeder für sich allein oder in beliebiger Kombination von Aspekten dazu beitragen, dass das Nachfüllventil nicht verstopft oder durch das Abrasivmittel blockiert.

Erfindungsgemäß weist das Nachfüllventil eine erste Schließstellung, eine erste Öffnungsstellung und eine zweite Öffnungsstellung auf, wobei in der ersten Schließstellung die Schleusenkammer vom Druckbehälter fluidgetrennt ist und in der ersten sowie der zweiten Öffnungsstellung die Schleusenkammer mit dem Druckbehälter fluidverbunden ist. Vorzugsweise liegt die Schließstellung zwischen der ersten Öffnungsstellung und der zweiten Öffnungsstellung. Damit bestehen für den Ventilkörper zwei Möglichkeiten zur Bewegungsrichtung, entweder das Ventil zur ersten Öffnungsstellung oder zur zweiten Öffnungsstellung hin zu öffnen. Ist also eine Bewegungsrichtung verstopft oder blockiert, so kann der Ventilkörper in die andere Bewegungsrichtung bewegt werden und das Ventil in die andere Öffnungsstellung gebracht werden. Sofern das Drehmoment einen bestimmten Schwellenwert nicht überschreitet, kann das Ventil allerdings auch ausschließlich in eine Richtung betätigt werden.

Erfindungsgemäß ist der Ventilraum in der Schließstellung des Ventilkörpers bedruckbar. Der Ventilraum weist dazu einen Druckeinlass auf, über den der Ventilraum in der Schließstellung des Ventilkörpers bedruckbar ist. Bei Inbetriebnahme der Anlage ist der Ventilraum nämlich zunächst drucklos. Wird der Druckbehälter und die Schleusenkammer dann auf etwa 2.000 bar bedruckt, hat sich herausgestellt, dass durch den hohen Druck der Ventilkörper von den Ventilsitzen eingequetscht wird und nur schwer oder gar nicht mehr bewegt werden kann. Mittels des Druckeinlasses, der mit einem Bypass einer Druckleitung verbunden ist, mit der auch der Druckbehälter und/oder die Schleusenkammer bedruckt wird, wird die Druckdifferenz bei Inbetriebnahme weitgehend reduziert, sodass der Ventilkörper nicht durch den hohen Druck eingequetscht wird. Beispielsweise kann der Druckeinlass lateral am Nachfüllventil angeordnet sein, wenn der Ventileingang und Ventilausgang vertikal oben bzw. unten am Nachfüllventil angeordnet sind.

Gemäß einer vorteilhaften Ausführungsform ist der Ventilraum durchspülbar. Dabei weist das Nachfüllventil einen Spüleinlass und einen Spülauslass auf, über welche der Ventilraum durchspülbar ist. Beispielsweise kann der Spüleinlass an einer ersten Seite lateral am Nachfüllventil angeordnet sein und der Spülauslass an einer der ersten Seite diametral gegenüberliegenden zweiten Seite lateral am Nachfüllventil, wenn der Ventileingang und Ventilausgang vertikal oben bzw. unten am Nachfüllventil angeordnet sind. Damit kann Abrasivmittel, das das Nachfüllventil blockiert oder verstopft, während der Schließstellung ausgespült werden. Dies ist besonders vorteilhaft in Kombination mit dem Druckeinlass, da ein Spüldurchgang bei drucklosem Ventilraum durchgeführt werden kann und danach der Ventilraum über den Druckeinlass wieder bedruckt werden kann, damit der Ventilkörper vom hohem Druck nicht eingequetscht wird. In Kombination mit dem Druckeinlass ist es vorteilhaft, wenn der Spülauslass über ein Spülauslassventil verschließbar ist und der Ventilraum über den Spüleinlass bedruckbar ist, wenn das Spülauslassventil geschlossen ist. Das heißt, dass der Spüleinlass selektiv als Druckeinlass oder als Spüleinlass benutzt werden kann. Es braucht daher dann nur einen Einlass, der sowohl als Druckeinlass als auch als Spüleinlass fungiert.

Gemäß einer vorteilhaften Ausführungsform weist das Nachfüllventil einen eingangsseitigen Ventilsitz und einen ausgangsseitigen Ventilsitz auf, wobei mindestens einer der Ventilsitze verstellbar ist, sodass der Abstand der Ventilsitze zueinander einstellbar ist. Somit kann das Nachfüllventil optimal eingestellt werden, um einerseits dicht zu sein und andererseits nicht zu blockieren. Es kann bei Inbetriebnahme der Anlage, bei Temperaturschwankungen, einer hartnäckigen Blockade durch Abrasivmittel und/oder materialverschleißbedingt ein Nachjustieren des Abstands der Ventilsitze zueinander vorteilhaft sein. Um dafür die Anlage nicht abschalten und auseinander bauen zu müssen, kann optional eine Werkzeugöffnung vorgesehen sein, durch die ein Werkzeug greifen kann, um den mindestens einen verstellbaren Ventilsitz einzustellen. Beispielsweise kann der mindestens eine verstellbare Ventilsitz über einen durch die Werkzeugöffnung eingeführten Hebel oder Schlüssel drehbar und somit über ein Gewinde axial verstellbar sein. Die bedienende Person kann somit manuell sofort eingreifen, um einen kontinuierlichen Betrieb sicherzustellen. Vorzugsweise kann allerdings das Einstellen des Ventilsitzes in einer Serviceprozedur bei druckloser Anlage durchgeführt werden. Alternativ oder zusätzlich kann das Nachjustieren auch automatisch gesteuert und/oder geregelt über einen Motor erfolgen. Dabei kann eine etwaige Undichtigkeit über einen durch mindestens einen Drucksensor ermittelten Druckabfall und ein etwaiges Festsitzen des Ventilkörpers über ein für das Bewegen des Ventilkörpers benötigtes Drehmoment erkannt werden. Alternativ oder zusätzlich dazu kann ein Parameter ein Festsitzen des Ventilkörpers anzeigen, wobei der Parameter mit dem für das Bewegen des Ventilkörpers benötigten Drehmoment korreliert ist, beispielsweise die Leistungsaufnahme eines Servoantriebsmotors, der den Ventilkörper antreibt, um das Nachfüllventil zu öffnen und zu schließen.

Optional im Hinblick auf die erfindungsgemäße Funktionsweise und Ansteuerung des Nachfüllventils in Verbindung mit mindestens einer vorteilhaften Ausführungsform kann der Ventilkörper von der ersten Schließstellung über eine Drehung in einer ersten Richtung in die erste Öffnungsstellung und über eine Drehung in einer zweiten Richtung in die zweite Öffnungsstellung überführbar sein. Vorzugsweise kann der Ventilkörper dabei eine zweite Schließstellung aufweisen, wobei der Ventilkörper von der zweiten Schließstellung über eine Drehung in der ersten Richtung in die zweite Öffnungsstellung und über eine Drehung in der zweiten Richtung in die erste Öffnungsstellung überführbar ist. Optional kann der Ventilkörper durch eine 180°-Drehung von der ersten Öffnungsstellung in die zweite Öffnungsstellung überführbar sein. Eine zweite Schließstellung kann auch deshalb vorteilhaft sein, weil der Ventilkörper entweder eingangsseitig oder ausgangsseitig mehr abgenutzt werden kann und somit die Abnutzung auf zwei Seiten verteilt werden kann und ggf. eine weniger abgenutzte Seite zur abzudichtenden Seite hin gedreht werden kann. Hier kann die Abnutzung eingangsseitig höher sein, da die eingangsseitig verbundene Schleusenkammer zeitweise unbedruckt ist während der ausgangsseitige Druckbehälter druckbeaufschlagt bleibt.

Optional kann das Nachfüllventil als Kugelhahn ausgestaltet sein, wobei der Ventilkörper im Wesentlichen kugelförmig mit einer axialen Durchbrechung ist, wobei der Ventileingang und der Ventilausgang auf diametral gegenüberliegenden Seiten des Ventilkörpers angeordnet sind, wobei in der ersten und der zweiten Öffnungsstellung die axiale Durchbrechung koaxial zum Ventileingang und Ventilausgang liegt.

Optional kann der Ventilkörper um eine zur axialen Durchbrechung im Wesentlichen senkrechte Drehachse drehbar sein. Dabei ist der Ventilkörper vorzugsweise über einen Motor in Form eines Servomotors gesteuert antreibbar. Beispielsweise kann dabei eine Antriebsrichtung und/oder eine Antriebsgeschwindigkeit und/oder ein Antriebsmoment des Motors abhängig von einem zum Antreiben des Ventilkörpers benötigten Drehmoment oder mindestens einem mit dem benötigten Drehmoment korrelierenden Parameter geregelt sein. Zum Beispiel kann eine Leistungsaufnahme des Motors bzw. ein Motorstrom solch ein Parameter sein, der mit dem benötigten Drehmoment korreliert.

Optional kann der Motor derart geregelt sein, dass bei Überschreitung eines Schwellenwertes für ein zum Antreiben des Ventilkörpers benötigtes Drehmoment oder eines Schwellenwertes für mindestens einen mit dem benötigten Drehmoment korrelierenden Parameter die Antriebsrichtung geändert wird. Alternativ oder zusätzlich kann das benötigte Drehmoment über einen Drehmomentsensor, z.B. in Form eines Dehnungsmessstreifens, oder die Drehgeschwindigkeit bei vorgegebener Motorleistung erfasst werden. Der kann hierbei also einfach in die andere Antriebsrichtung ausweichen, wenn der Widerstand zur Bewegung des Ventilkörpers in eine Antriebsrichtung zu hoch ist.

Optional kann das Nachfüllventil eine zweite Schließstellung zwischen der zweiten Öffnungsstellung und der ersten Öffnungsstellung aufweisen, wobei der Motor derart geregelt sein kann, dass bei Nicht-Überschreitung eines Schwellenwertes für das zum Antreiben des Ventilkörpers benötigte Drehmoment oder eines Schwellenwertes für mindestens einen mit dem benötigten Drehmoment korrelierenden Parameter die Antriebsrichtung gleich bleibt.

Optional kann eine Überwachungseinheit vorgesehen sein, die dazu ausgestaltet ist, ein zum Antreiben des Ventilkörpers benötigtes Drehmoment oder mindestens einen mit dem benötigten Drehmoment korrelierenden Parameter über mindestens ein Zeitfenster hinweg kontinuierlich oder diskret zu überwachen, um Verschleiß zu erkennen oder einen Fehler- bzw. Wartungsfall anzuzeigen. Die Überwachungseinheit kann Teil der Motorsteuerung sein oder separat ausgestaltet sein. Die Überwachungseinheit kann dabei über mindestens ein Zeitfenster hinweg Parameter speichern, um die Amplitude und/oder Häufigkeit von Drehmomentspitzen anzuzeigen, als einen Fehler- bzw. Wartungsfall zu interpretieren oder zur Motorregelung zu verwenden. Beispielsweise kann in einem ersten Zeitfenster die Amplitude und/oder Häufigkeit von Drehmomentspitzen kontinuierlich oder in diskreten Werten aufgenommen, dann beispielsweis eine Hin- und Herbewegung des Ventilkörpers veranlasst, dann in einem zweiten Zeitfenster wieder die Amplitude und/oder Häufigkeit von Drehmomentspitzen kontinuierlich oder in diskreten Werten aufgenommen und schließlich die Werte vom ersten und zweiten Zeitfenster verglichen werden. Falls sich durch das Hin- und Herbewegen des Ventilkörpers die Amplitude und/oder die Häufigkeit von Drehmomentspitzen nicht ausreichend reduziert hat, kann ein Fehler- bzw. Wartungsfall angezeigt werden.

In solch einem Fehler- bzw. Wartungsfall kann erfindungsgemäß der Ventilraum bedruckt und vorzugsweise in einer Serviceprozedur bei druckloser Anlage gespült werden. Alterativ oder zusätzlich kann gemäß einer vorteilhaften Ausführungsform die Nachjustierung mindestens eines Ventilsitzes vorzugsweise in einer Serviceprozedur bei druckloser Anlage erfolgen. Jede dieser Maßnahmen kann allerdings auch während eines kontinuierlichen Betriebs der Schneidanlage stattfinden, sodass ein Fehler- bzw. Wartungsfall des Nachfüllventils behoben werden kann, ohne den kontinuierlichen Betrieb der Schneidanlage zu beeinträchtigen.

Optional ist im Hinblick auf die Funktionsweise der gesamten Anlage der Ventileingang an einer Oberseite und der Ventilausgang an einer Unterseite des Nachfüllventils angeordnet, wobei die Schleusenkammer oberhalb des Nachfüllventils und der Druckbehälter unterhalb des Nachfüllventils angeordnet ist, sodass Abrasivmittel schwerkraftunterstützt oder schwerkraftbetrieben durch das Nachfüllventil strömen kann. Über eine Rückflussleitung vom Druckbehälter nach oben in die Schleusenkammer kann das durch das einströmende Abrasivmittel aus dem Druckbehälter verdrängte Wasser aus dem Druckbehälter nach oben in die Schleusenkammer laufen. Während dieses Nachfüllens ist die Schleusenkammer wie der Druckbehälter bedruckt und ein Kreislauf besteht, bei dem Abrasivmittel aus der Schleusenkammer in den Druckbehälter nachströmt und Wasser aus dem Druckbehälter in die Schleusenkammer nachrückt bis die Schleusenkammer weitgehend nur noch Wasser enthält. Dieser Kreislauf kann zur Beschleunigung des Nachfüllvorgangs durch eine Pumpe, vorzugsweise mit einem extern angetriebenen Impeller, unterstützt oder betrieben werden, wobei die Pumpe vorzugsweise an der Rückflussleitung angeordnet sein kann, die Wasser mit geringerem oder keinem Abrasivmittel-Anteil führt. Während dieses Befüllvorgangs kann die Schneidanlage kontinuierlich weiterlaufen, da der Druckbehälter konstant bedruckt bleibt. Stromaufwärts der Pumpe kann im Kreislauf ein Filter oder Abscheider vorhanden sein, um Abrasivmittel herauszufiltern oder abzuscheiden, sodass die Pumpe möglichst wenig durch Abrasivmittel verschleißt.

Optional weist die Anlage einen Nachfülltrichter und ein Befüllventil auf, wobei das Befüllventil einen Ventileingang, einen Ventilausgang, einen zwischen dem Ventileingang und dem Ventilausgang angeordneten Ventilraum und einem in dem Ventilraum befindlichen Ventilkörper aufweist, wobei der Ventileingang mit dem Nachfülltrichter und der Ventilausgang mit der Schleusenkammer verbunden ist. Während das Nachfüllventil somit ein unteres Scheusenventil darstellen kann, kann das Befüllventil ein oberes Scheusenventil mit zwischen den Ventilen liegender Schleusenkammer darstellen. Das Nachfüllventil und das Befüllventil sind dabei vorzugsweise im kontinuierlichen Betrieb der Anlage niemals gleichzeitig geöffnet. Das Nachfüllventil kann vorzugsweise bei bedruckter Schleusenkammer beim Nachfüllvorgang des Druckbehälters mit Abrasivmittel aus der Schleusenkammer geöffnet sein, während das Befüllventil bei unbedruckter Schleusenkammer beim Nachladevorgang der Schleusenkammer mit Abrasivmittel aus dem Nachfülltrichter geöffnet sein kann. Wenngleich das Problem des Blockierens und Verstopfens eher für das Nachfüllventil besteht, da nur das Nachfüllventil unter Hochdruck betätigt werden muss, können das Nachfüllventil und das Befüllventil im Wesentlichen identisch ausgeführt sein. Alternativ kann allerdings das Befüllventil auch weniger komplex beispielsweise ohne Druckeinlass, ohne Spüleinlass und -auslass und/oder ohne justierbare Ventilsitze ausgestaltet sein.

Die Offenbarung ist nachfolgend anhand von in der Zeichnung dargestellten Ausführungsbeispielen näher erläutert. Es zeigen:
Fig. 1 ein schematisches Schaltbild eines ersten Ausführungsbeispiels der hierein offenbarten Wasser-Abrasiv-Suspensions-Schneidanlage;
Fig. 2 ein schematisches Schaltbild eines zweiten Ausführungsbeispiels der hierein offenbarten Wasser-Abrasiv-Suspensions-Schneidanlage;
Fig. 3 ein schematisches Schaltbild eines dritten Ausführungsbeispiels der hierein offenbarten Wasser-Abrasiv-Suspensions-Schneidanlage;
Fig. 4 ein schematisches Schaltbild eines vierten Ausführungsbeispiels der hierein offenbarten Wasser-Abrasiv-Suspensions-Schneidanlage;
Fig. 5 ein schematisches Schaltbild eines fünften Ausführungsbeispiels der hierein offenbarten Wasser-Abrasiv-Suspensions-Schneidanlage;
Fig. 6a-c schematische Teilschaltbilder dreier unterschiedlicher Ausführungsformen einer Förderhilfe der hierein offenbarten Wasser-Abrasiv-Suspensions-Schneidanlage;
Fig. 7a-c schematische Teilschaltbilder dreier unterschiedlicher Ausführungsformen einer Abrasivmittelstromsteuerung der hierein offenbarten Wasser-Abrasiv-Suspensions-Schneidanlage;
Fig. 8-12 schematische Schaltbilder fünf unterschiedlicher Ausführungsformen einer Abrasivmittelnachfuhreinrichtung der hierein offenbarten Wasser-Abrasiv-Suspensions-Schneidanlage;
Fig. 13 ein schematisches Ablaufdiagramm eines Ausführungsbeispiels des hierein offenbarten Verfahrens zum Wasser-Abrasiv-Suspensions-Schneiden;
Fig. 14 Druck-Zeit-Diagramme in einer Schleusenkammer, in einem Druckspeicher und in einer Hochdruckleitung gemäß einem Ausführungsbeispiel der hierein offenbarten Wasser-Abrasiv-Suspensions-Schneidanlage;
Fig. 15a-b Querschnitte in einer xz-Ebene durch ein Nachfüllventil in zwei verschiedenen Öffnungsstellungen gemäß einem Ausführungsbeispiel der hierein offenbarten Wasser-Abrasiv-Suspensions-Schneidanlage;
Fig. 16a-b Querschnitte in einer xz-Ebene durch ein Nachfüllventil in zwei verschiedenen Schließstellungen gemäß einem Ausführungsbeispiel der hierein offenbarten Wasser-Abrasiv-Suspensions-Schneidanlage;
Fig. 17a-b Querschnitte in einer yz-Ebene durch ein Nachfüllventil in Schließstellung gemäß zweier unterschiedlicher Ausführungsbeispiele der hierein offenbarten Wasser-Abrasiv-Suspensions-Schneidanlage;
Fig. 18a-b perspektivische Ansichten auf ein Nachfüllventil gemäß einem Ausführungsbeispiel der hierein offenbarten Wasser-Abrasiv-Suspensions-Schneidanlage; und
Fig. 19a-b Querschnitte durch ein Absperrventil in Form eines Nadelventils gemäß zwei verschiedener Ausführungsbeispiele der hierein offenbarten Wasser-Abrasiv-Suspensions-Schneidanlage in einer Öffnungsstellung.

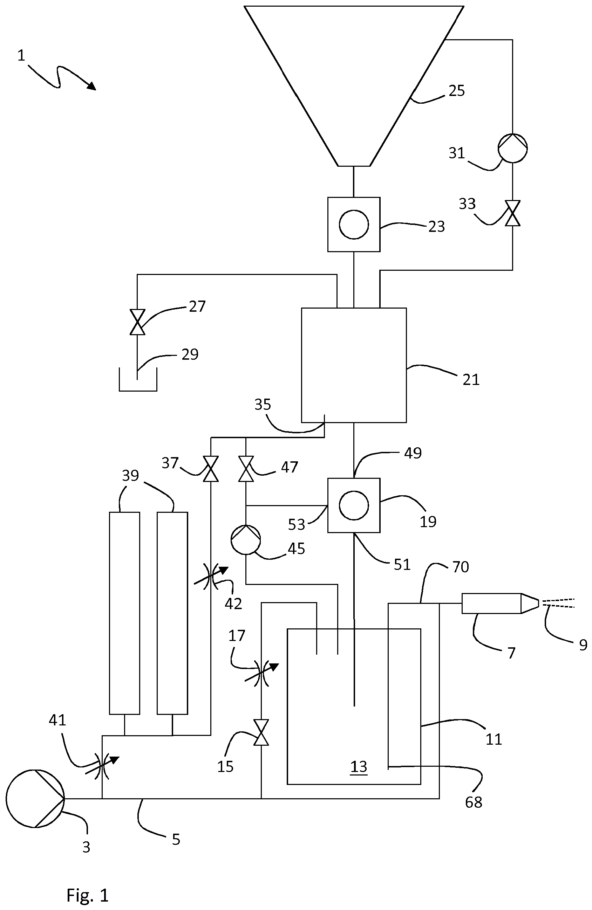

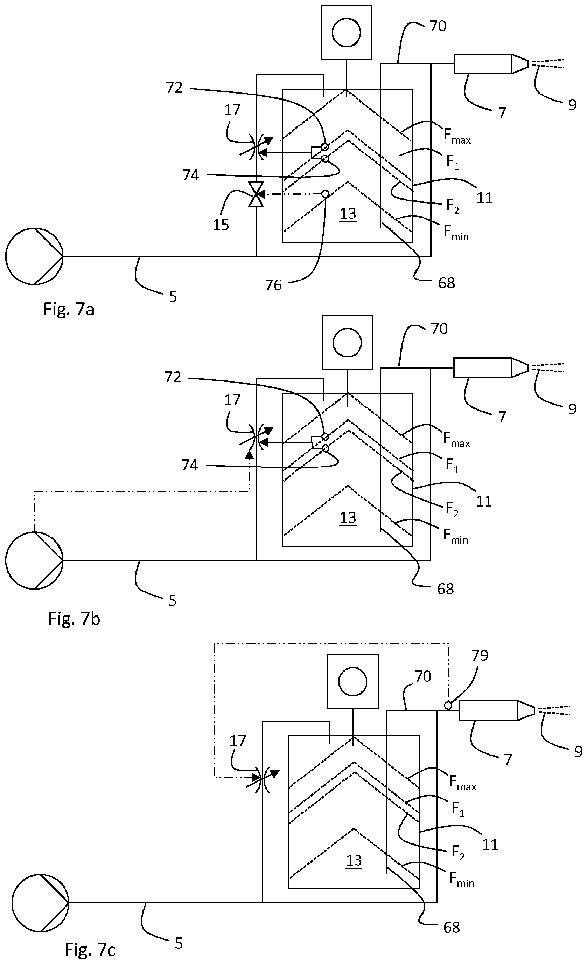

Die in Fig. 1 gezeigte Wasser-Abrasiv-Suspensions-Schneidanlage 1 weist eine Hochdruckquelle 3 auf, die in einer Hochdruckleitung 5 Wasser unter einem Hochdruck p₀ von etwa 1.500 bis 4.000 bar zur Verfügung stellt. Die Hochdruckleitung 5 ist mit einer Austrittsdüse 7 verbunden, aus der das unter Hochdruck stehende Wasser mit sehr hoher Geschwindigkeit in einem Strahl 9 austritt. Damit der Strahl 9 effektiv als Schneidstrahl zum Schneiden von Material verwendet werden kann, ist die Hochdruckleitung 5 derart verzweigt, dass zumindest ein Teil des Durchflusses durch die Hochdruckleitung 5 durch einen Druckbehälter 11 geführt wird, in dem sich eine Wasser-Abrasivmittel-Suspension 13 befindet. Über ein Absperrventil 15 kann das Zuführen der Wasser-Abrasivmittel-Suspension 13 zur Austrittsdüse ein- und ausgeschaltet werden. Der Anteil der Wasser-Abrasivmittel-Suspension 13 im Strahl 9 kann über eine Drossel 17 eingestellt werden, indem die Durchflussmenge in dem durch den Druckbehälter 11 geführten Nebenstrang der Hochdruckleitung 5 gedrosselt wird. Die Drossel 17 kann statisch beispielsweise in Form einer Lochblende oder einstellbar bzw. regelbar ausgestaltet sein. Vorzugsweise ist die Drossel 17 einstellbar, sodass die Drossel 17 ggf. auch vollständig den Zufluss in den Druckbehälter 11 absperren kann, sodass auf das Absperrventil 15 verzichtet werden kann. Die Drossel 17 ist vorzugsweise regelbar, wobei ein für den Abrasivmittelentnahmestrom charakteristisches Signal, das aus einem Sensor oder einem zur Verfügung stehenden Betriebsparameter gewonnen werden kann, als Regelgröße zur Regelung der Öffnung der Drossel 17 verwendet wird (siehe Fig. 7a-c).

Beim Schneiden wird dem Druckbehälter 11 Wasser-Abrasivmittel-Suspension 13 entnommen und Wasser unter Hochdruck zugeführt, wobei also das im Druckbehälter 11 befindliche Abrasivmittel verbraucht wird. Es muss daher der Druckbehälter 11 kontinuierlich oder sequenziell mit Abrasivmittel nachgefüllt werden. Dazu ist oberhalb des Druckbehälters 11 ein Nachfüllventil 19 in Form eines Kugelhahns angeordnet. Das Nachfüllventil 19 verbindet eine über dem Nachfüllventil 19 angeordnete Schleusenkammer 21 mit dem Druckbehälter 11. Über der Schleusenkammer 21 ist wiederum ein Befüllventil 23 angeordnet, das einen über der Schleusenkammer 21 angeordneten Nachfülltrichter 25 mit der Schleusenkammer 21 verbindet. Das Befüllventil 23 kann im Wesentlichen baugleich zum Nachfüllventil 19 in Form eines Kugelhahns ausgestaltet sein.

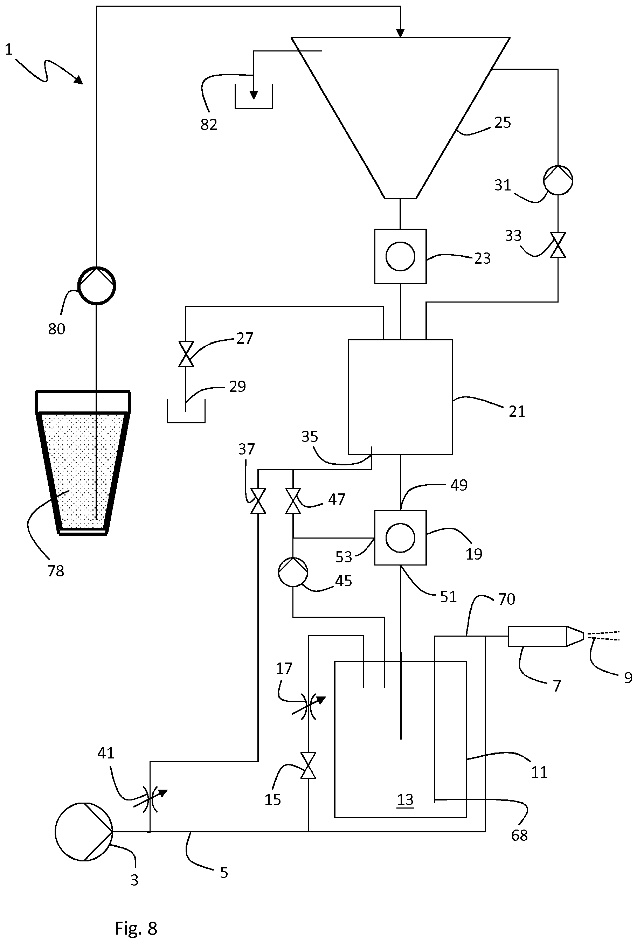

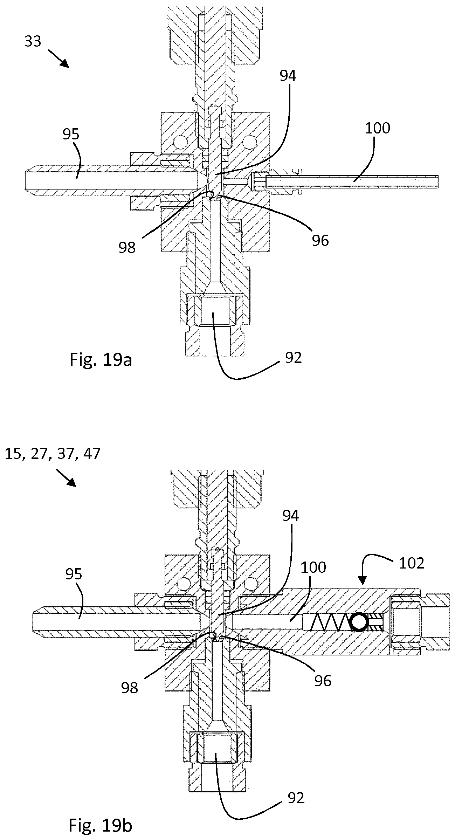

Der Nachfülltrichter 25 steht nicht unter Druck, sodass von oben trockenes, feuchtes oder nasses Abrasivmittel oder eine Wasser-Abrasivmittel-Suspension eingefüllt werden kann (siehe Figuren 8-12). Dies kann zumindest teilweise ein aus dem Schneidstrahl 9 wiederaufbereitetes Abrasivmittel sein, das über eine Fördereinrichtung (siehe Figuren 8-12) in trockener, nasser, gefrorener, pelletierter oder suspendierter Form von oben in den Nachfülltrichter 25 eingefüllt werden kann. Wenn das Nachfüllventil 19 geschlossen ist, kann die Schleusenkammer 21 zeitweise drucklos sein. Beispielsweise kann ein Druck in der Schleusenkammer 21 über ein Druckablassventil 27 in Form eines Nadelventils in einen Ablauf 29 abgelassen werden. Bei druckloser Schleusenkammer 21 kann das Befüllventil 23 geöffnet sein, sodass Abrasivmittel aus dem Nachfülltrichter 25 in die Schleusenkammer 21 fällt. Dieses schwerkraftbedingte Füllen der Schleusenkammer 21 mit Abrasivmittel kann unterstützt und beschleunigt werden durch eine Pumpe 31. Die Pumpe 31 kann saugseitig mit der Schleusenkammer 21 verbunden sein und druckseitig mit dem Nachfülltrichter 25. Damit kann die Pumpe 31 Abrasivmittel in die Schleusenkammer 21 saugen. Dies ist vor allem dann besonders sinnvoll, wenn Abrasivmittel im verjüngten unteren Bereich des Nachfülltrichters 25 bzw. am Befüllventil 23 verstopft. Durch ein Absaugen des Abrasivmittels nach unten durch die Pumpe 31 kann eine Verstopfung aufgelöst oder das Entstehen einer Verstopfung verhindert werden. Damit die Pumpe 31 nicht für Hochdruck ausgelegt werden muss, ist es vorteilhaft, wenn die Pumpe 31 mittels eines Pumpenabsperrventils 33 in Form eines Nadelventils von der Schleusenkammer 21 absperrbar ist. Das Pumpenabsperrventil 33 kann dabei durchspülbar ausgestaltet sein, um den Ventilsitz und den Ventilkörper, z.B. in Form einer Ventilnadel, von Abrasivmittel freizuspülen (siehe Figuren 19a-b). Dadurch wird zum einen ein dichtes Schließen des Pumpenabsperrventils 33 gewährleistet und der Materialverschleiß im Ventil verringert. Die Pumpe 31 kann mittels eines vorgelagerten Filters und/oder Abscheiders (beides nicht gezeigt) vor Abrasivmittel weitestgehend geschützt werden.

Das Pumpenabsperrventil 33 wird lediglich dann geöffnet, wenn die Schleusenkammer 21 bereits drucklos ist. Daher kann für das Pumpenabsperrventil 33 eine erste Ausführungsform des Nadelventils gemäß Fig. 19a verwendet werden, bei der ein seitlicher Spüleinlass und ein gegenüberliegender seitlicher Spülauslass vorgesehen ist. Für das Druckablassventil 27 hingegen ist die zweite Ausführungsform des Nadelventils gemäß Fig. 19b vorteilhafter, bei der ein Rückschlagventil am Spüleinlass vorgesehen ist. Da das Druckablassventil 27 bei Hochdruck geöffnet wird, verhindert das Rückschlagventil einen Druckablass in Richtung des Spüleinlasses. Der Spülauslass kann in den Ablauf 29 münden, sodass sowohl der Druckablass als auch der Spülmittelablass ausschließlich zum Ablauf 29 hin stattfindet und nicht zum Spüleinlass.

Sobald die Schleusenkammer 21 nun beispielsweise mit 1kg Abrasivmittel gefüllt ist, kann das Befüllventil 23 geschlossen werden. Außerdem werden nun das Druckablassventil 27 und das Pumpenabsperrventil 33 geschlossen. Die Schleusenkammer 21 weist in einem unteren Bereich einen Bedruckungseingang 35 auf, über den die Schleusenkammer 21 bedruckbar ist. Der Bedruckungseingang 35 ist in dem Ausführungsbeispiel der Fig. 1 über ein Bedruckungsventil 37 in Form eines Nadelventils absperrbar mit einem Druckspeicher 39 und über Drosseln 41, 42 mit der Hochdruckleitung 5 verbunden. Der Druckspeicher 39 weist zwei Druckspeichereinheiten in Form von Federspeichern auf, die parallel mit dem Eingang des Bedruckungsventils 37 verbunden sind. Der Druckspeicher 39 ist über die Drossel 41 mit der Hochdruckleitung 5 verbunden. Die Drosseln 41, 42 können statisch, beispielsweise in Form von Lochblenden, oder einstellbar bzw. regelbar ausgestaltet sein. Sind die Drosseln 41, 42 einstellbar bis zu einem Grad, bei dem die Verbindung zwischen der Hochdruckleitung 5 und dem Bedruckungseingang 35 vollständig abgesperrt werden kann, kann ggf. auf das Bedruckungsventil 37 verzichtet werden. Der Druckspeicher 39 ist voll druckbeladen, bevor die Schleusenkammer 21 bedruckt wird. Sobald das Bedruckungsventil 37 geöffnet wird, druckentlädt sich der Druckspeicher 39 in die Schleusenkammer 21 und bedruckt diese somit schnell auf etwa 40% des Hochdrucks p₀, der in der Hochdruckleitung 5 als nomineller Hochdruck von der Hochdruckquelle 3 bereitgestellt wird. Durch diese schnelle Teilbedruckung wird ein Druckimpuls von unten in die Schleusenkammer 21 eingeleitet, der das Abrasivmittel auflockert. Dies ist für das spätere Ablassen des Abrasivmittels in den Druckbehälter 11 vorteilhaft. Da auch die Hochdruckleitung 5 über die Drossel 41 mit der Schleusenkammer 21 verbunden ist, findet mit der Öffnung des Bedruckungsventils 37 parallel auch eine gedrosselte, d.h. langsamere, Bedruckung durch die Hochdruckleitung 5 statt. Sobald der Druckspeicher 39 druckentladen ist, wird der restliche benötigte Druck in der Schleusenkammer 21 von etwa 60% des nominellen Hochdrucks p₀ ausschließlich über die gedrosselte, d.h. langsamere, Bedruckung aus der Hochdruckleitung 5 aufgebaut. Damit wird die Amplitude des Druckabfalls in der Hochdruckleitung 5 auf ein Minimum beschränkt.

In der in Fig. 1 gezeigten ersten Ausführungsform wird der Druckspeicher 39 sofort ab dem Moment wieder druckbeladen, in dem er sich druckentladen hat. In diesem Fall bedruckt die Hochdruckleitung 5 sowohl die Schleusenkammer 21 mit dem Restdruck als auch den Druckspeicher 39. Dies ist insbesondere dann vorteilhaft, wenn das Druckbeladen des Druckspeichers 39 so zeitintensiv ist, dass die Nachfülldurchgangrate von der Druckladezeit des Druckspeichers 39 abhängt.

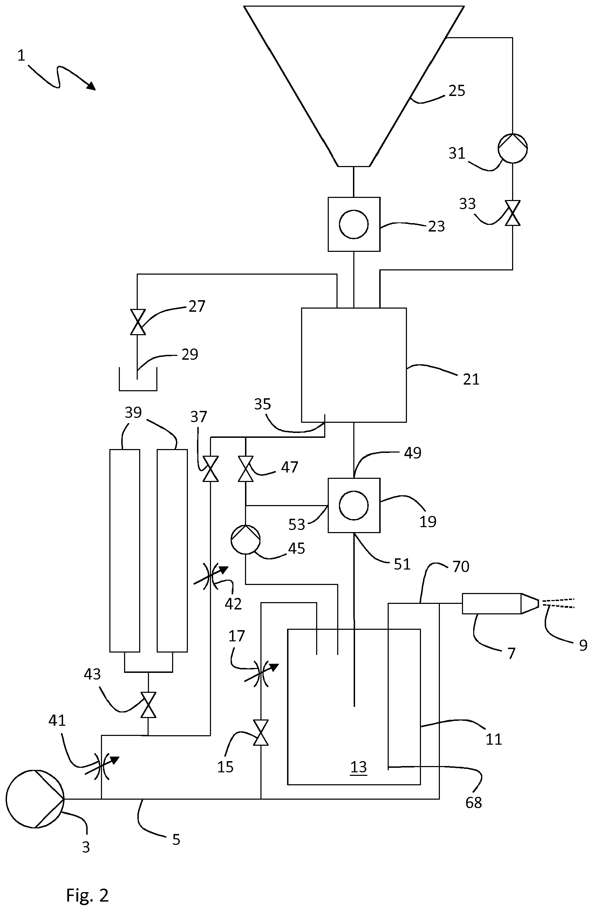

In der in Fig. 2 gezeigten zweiten Ausführungsform ist der Druckspeicher 39 mit einem Druckspeicherventil 43 in Form eines Nadelventils absperrbar. In dem Moment, in dem sich der Druckspeicher 39 druckentladen hat, kann das Druckspeicherventil 43 abgesperrt werden, um die Hochdruckleitung 5 während der Bedruckung der Schleusenkammer 21 nicht zusätzlich mit dem Druckbeladen des Druckspeichers 39 zu belasten. Eine solche Belastung könnte einen Druckabfall in der Hochdruckleitung 5 verursachen, der negativen Einfluss auf die Schneidleistung an der Austrittsdüse 7 haben könnte. Es ist daher vorteilhaft, das Druckspeicherventil 43 erst dann zu öffnen, wenn die Schleusenkammer 21 vollständig bedruckt ist und das Bedruckungsventil 37 geschlossen, damit der Druckspeicher 39 über die Drossel 41 aus der Hochdruckleitung 5 druckbeladen werden kann. Dies ist insbesondere dann vorteilhaft, wenn das Druckbeladen des Druckspeichers 39 nicht so zeitintensiv ist, dass die Nachfülldurchgangrate von der Druckladezeit des Druckspeichers 39 abhängt. Das Befüllen der Schleusenkammer 21 und das Nachfüllen des Druckbehälters 11 können zumeist länger dauern als das Druckbeladen des Druckspeichers 39. Die Drossel 41 kann so eingestellt sein, dass das Bedrucken des Druckspeichers 39 möglichst langsam abläuft, aber noch schnell genug, damit vor dem nächsten Durchgang zur Bedruckung der Schleusenkammer 21 der Druckspeicher 39 vollständig druckbeladen ist.

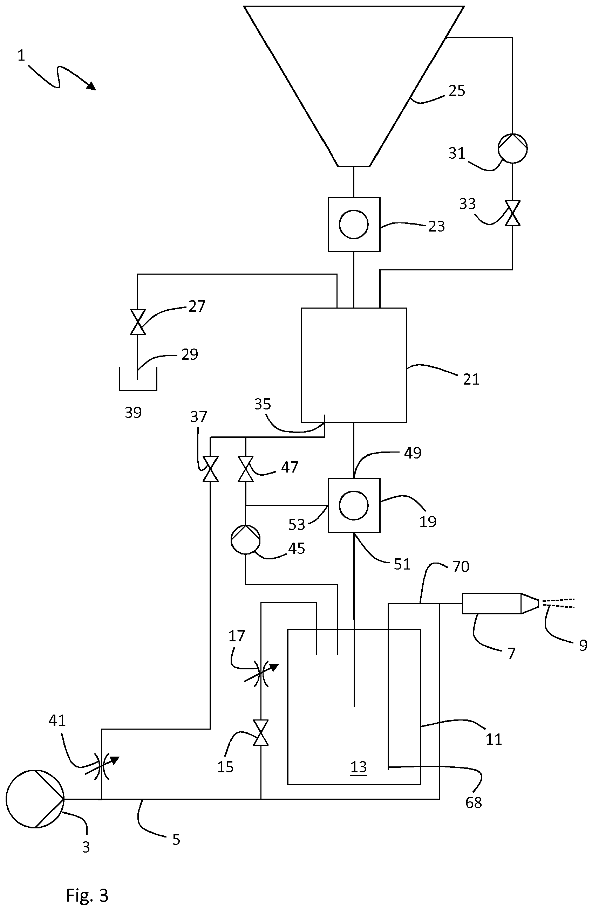

In einer dritten Ausführungsform gemäß Fig. 3 wird ganz auf den Druckspeicher 39 verzichtet und die Schleusenkammer 21 ausschließlich über die Drossel 41 aus der Hochdruckleitung 5 bedruckt. Dies ist dann vorteilhaft, wenn die Hochdruckquelle 3 beispielsweise über eine Servopumpensteuerung so schnell auf einen anfänglichen Druckabfall reagieren und die Pumpenleistung entsprechend schnell anpassen kann, dass es gar nicht erst zu einer großen Amplitude eines Druckabfalls kommt. Über Drucksensoren kann der Hochdruckquelle 3 ein anfänglicher Druckabfall mitgeteilt werden, sodass die Hochdruckquelle 3 mit einer Leistungssteigerung bzw. Drehzahlerhöhung einem weiteren Druckabfall schnell gegensteuern kann. Über die Drossel 41 kann bereits der anfängliche Druckabfall abgemildert werden, sodass es zu keinem Zeitpunkt zu einem Druckabfall kommt, der die Schneidleistung signifikant beeinträchtigt.

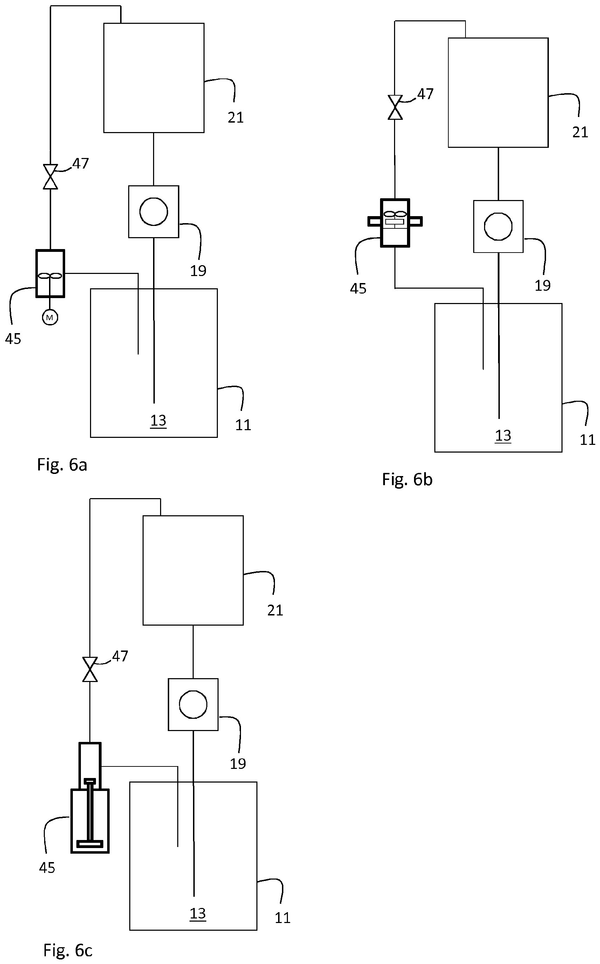

Sobald nun die Schleusenkammer 21 vollständig bedruckt ist, kann das Nachfüllventil 19 geöffnet werden, damit schwerkraftbedingt oder -unterstützt Abrasivmittel aus der Schleusenkammer 21 durch das Nachfüllventil 19 in den Druckbehälter 11 strömen kann, um diesen nachzufüllen. Vorzugsweise ist eine Förderhilfe 45, beispielsweise in Form einer Pumpe, vorgesehen, die saugseitig mit dem Druckbehälter 11 und druckseitig mit der Schleusenkammer 21 verbunden ist. Die Förderhilfe 45 unterstützt bzw. erzeugt den Abrasivmittelstrom aus der Schleusenkammer 21 nach unten in den Druckbehälter 11. Sie kann Verstopfungen von Abrasivmittel verhindern oder lösen und den schwerkraftbedingten bzw. -unterstützten Nachfüllvorgang beschleunigen. Im Unterschied zur Pumpe 31 am Nachfülltrichter 25 arbeitet die Förderhilfe 45 am Druckbehälter 11 mit Wasser unter dem nominellen Hochdruck p₀. Sie muss daher für den Hochdruckbetrieb ausgelegt sein. Beispielsweise kann sie, wie in Fig. 6b gezeigt, lediglich ein induktiv angetriebenes Schaufelrad im Hochdruck aufweisen, sodass die Anzahl der beweglichen Teile, die unter Hochdruck stehen, minimiert ist. Ein Förderhilfeabsperrventil 47 ist zwischen der Förderhilfe 45 und der Schleusenkammer 21 angeordnet, wobei das Förderhilfeabsperrventil 47 in Form eines Nadelventils die Pumpe 47 gegenüber der Schleusenkammer 21 absperren kann, wenn die Schleusenkammer 21 nicht oder nicht vollständig bedruckt ist. Vorzugsweise ist das Förderhilfeabsperrventil 47 ein spülbares Nadelventil gemäß Fig. 19b mit einem Rückschlagventil am Spüleinlass, da es unter Hochdruck betätigt wird.

Fig. 6a-c zeigen verschiedene alternative Ausführungsformen für die Förderhilfe 45. Die Förderhilfe 45 kann beispielsweise einen über eine Welle von außen angetriebenen Impeller aufweisen (siehe Fig. 6a) oder einen induktiv angetriebenen Impeller (siehe Fig. 6b). Die Förderhilfe 45 kann auch über einen Kolbenhub das Nachfüllen von Abrasivmittel in den Druckbehälter 11 unterstützen (siehe Fig. 6c). Die Förderhilfe 45 kann kontinuierlich pumpen bzw. fördern oder zeitlich begrenzt bzw. gepulst. Es kann ggf. ausreichen, wenn der Abrasivmittelfluss in den Druckbehälter 11 nur anfänglich unterstützt wird und dann schwerkraftunterstützt allein schnell genug weiterläuft. Alternativ oder zusätzlich kann der Abrasivmittelfluss in den Druckbehälter 11 kontinuierlich unterstützt bzw. erzeugt werden.

Das Nachfüllventil 19 weist neben einem oberen Ventileingang 49 und einem unteren Ventilausgang 51 auch einen seitlichen Druckeinlass 53 auf. Über den Druckeinlass 53 kann ein Ventilraum, in dem sich ein beweglicher Ventilkörper befindet, bedruckt werden. Ohne Bedruckung des Ventilraums kann es nämlich sein, dass bei Inbetriebnahme der Anlage die sehr hohen Drücke auf den Ventileingang 49 und den Ventilausgang 51 den Ventilkörper so stark in den Ventilsitz pressen, dass sich der Ventilkörper nicht mehr bewegen lässt. Über den seitlichen Druckeinlass 53 kann ein Druckausgleich im Nachfüllventil 19 hergestellt werden, sodass der Ventilkörper nach Inbetriebnahme beweglich ist.

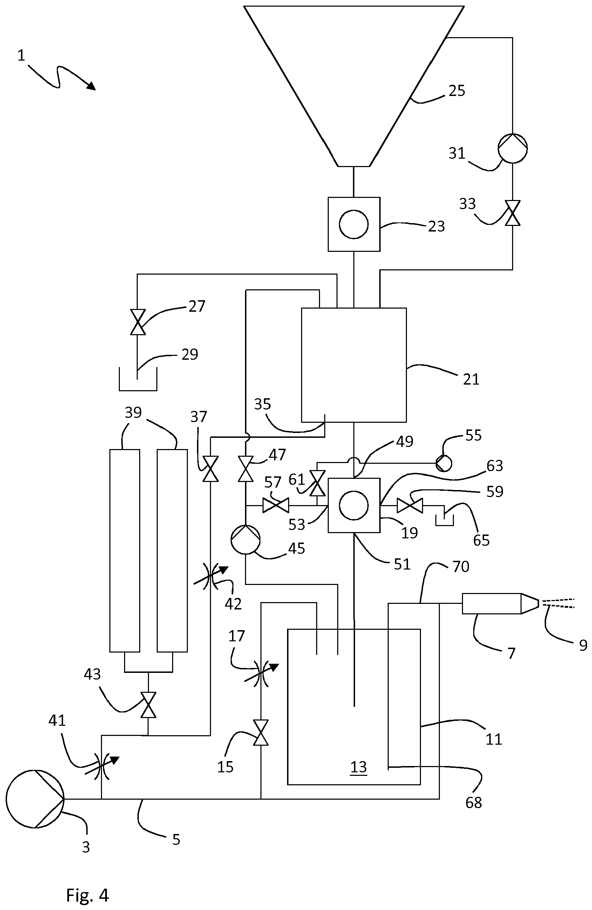

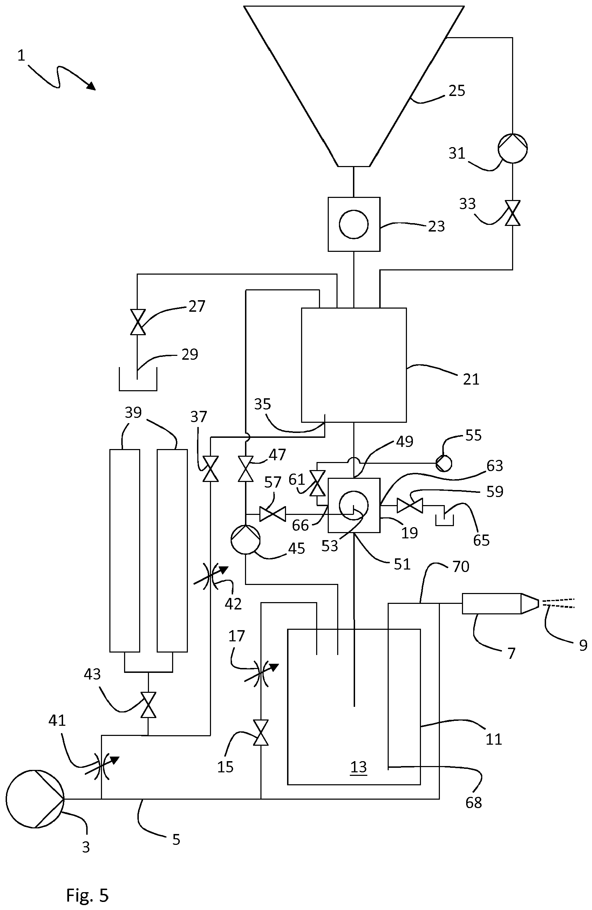

In dem in Fig. 4 und 5 gezeigten vierten bzw. fünften Ausführungsbeispiel ist eine Spülung für das Nachfüllventil 19 vorgesehen. Dazu kann eine Spülquelle 55 absperrbar mit dem Druckeinlass 53 verbunden sein (siehe Fig. 4). Vorzugsweise sind drei Spülventile 57, 59, 61 dazu vorgesehen, die Spülung ein- und ausschalten zu können bzw. vom Hochdruck zu trennen. Ein erstes Spülventil 57 in Form eines Nadelventils ist zwischen der Förderhilfe 45 und dem Druckeinlass 53 angeordnet. Ein zweites Spülventil 59, hier auch als Spülauslassventil 59 bezeichnet, ist in Form eines Nadelventils zwischen einem seitlichen Spülauslass 63 und einem Ablauf 65 angeordnet. Ein drittes Spülventil 61 in Form eines Nadelventils ist zwischen der Spülquelle 55 und dem Druckeinlass 53 angeordnet.

Um nun das Nachfüllventil 19 mit Wasser oder einer Wasser-Spülmittel-Mischung durchzuspülen, damit ein Ventilraum des Nachfüllventils 19 von Abrasivmittelresten befreit werden kann, ist das Nachfüllventil 19 vorzugsweise geschlossen. Das erste Spülventil 57 wird ebenfalls geschlossen, damit vom Druckeinlass 53 Druck abgelassen werden kann, ohne den Druck an der Förderhilfe 45 abzulassen. Das zweite Spülventil 59 wird zum Ablauf 65 hin geöffnet, sodass der ggf. bestehende Hochdruck aus dem Ventilraum abgelassen werden kann. Wird nun das dritte Spülventil 61 geöffnet, so fließt Wasser bzw. eine Wasser-Spülmittel-Mischung durch den Ventilraum zum Ablauf 65 und spült diesen somit von Abrasivmittelresten frei. Vorzugsweise wird das Spülen des Nachfüllventils 19 bei vollständig druckloser Anlage 1 als Serviceprozedur durchgeführt, um den Ventilraum vollständig ausspülen zu können und ggf. den Ventilkörper dabei bewegen zu können.

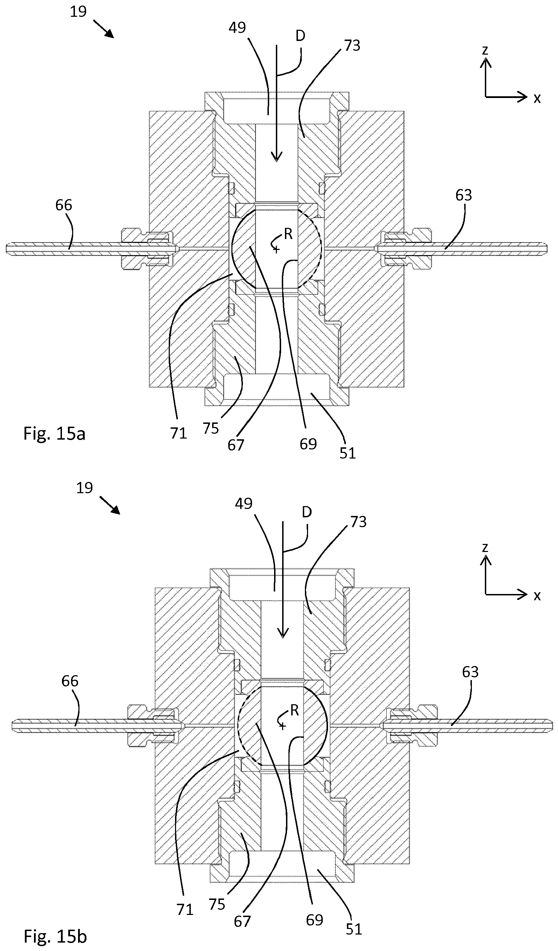

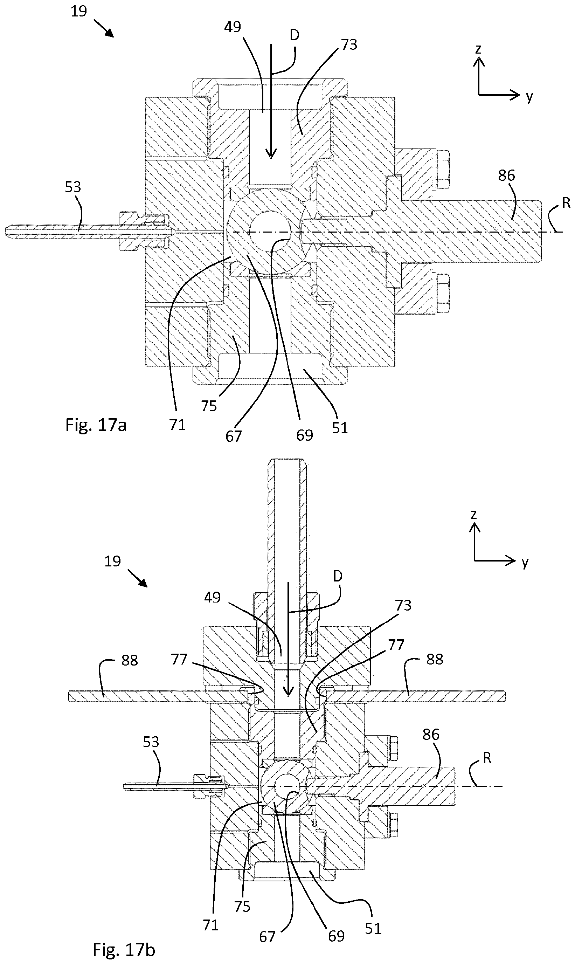

Alternativ zur vierten Ausführungsform gemäß Fig. 4 kann in einer fünften Ausführungsform nach Fig. 5 ein Spüleinlass 66 separat vom Druckeinlass 53 vorgesehen (siehe auch Fig. 15a-b und 17a-b). Der Druckeinlass 53 kann koaxial zu einer Servomotorwelle 86 und dieser gegenüberliegend angeordnet sein, wobei der Spüleinlass 66 und der Spülauslass 63 quer zur Servomotorwelle 86 koaxial zueinander und an sich jeweils gegenüberliegenden Seiten angeordnet sein können.

Das Spülen wird durch Schließen der drei Spülventile 57, 59, 61 in umgekehrter Reihenfolge wieder beendet, d.h. das dritte Spülventil 61 wird zunächst geschlossen, sodass der Spülfluss gestoppt wird. Dann wird das zweite Spülventil 59 geschlossen, um den Ventilraum gegenüber dem Ablauf 65 abzuschließen. Schließlich kann das erste Spülventil 57 geöffnet werden, damit der Ventilraum mit Hochdruck bedruckt wird. Das Bedrucken des Ventilraums ist vorteilhaft, da ein Ventilkörper im Nachfüllventil 19 durch die hohe Druckdifferenz zwischen dem Ventilausgang 51 oder Ventileingang 49 und dem Ventilraum so stark in einen Ventilsitz gepresst werden kann, dass sich dieser nicht mehr bewegen lässt. Das Bedrucken des Ventilraums schafft dagegen einen Druckausgleich, sodass der Ventilkörper im Nachfüllventil 19 beweglich bleibt.

In den Teilschaltbildern gemäß Fig. 7a-c wird eine bevorzugte Regelung des Abrasivmittelentnahmeflusses verdeutlicht. Zur Beimengung von Abrasivmittel in den Schneidstrahl 9 ist eine Abzweigung der Hochdruckleitung 5 durch den mit Abrasivmittelsuspension 13 gefüllten Druckbehälter 11 geführt. Eine im unteren Bereich des Druckbehälters 11 angeordnete Entnahmestelle 68 ist über eine Abrasivmittelleitung 70 mit der Austrittsdüse 7 verbunden, und eine Abzweigung der Hochdruckleitung 5 ist über ein Regelventil bzw. regelbare Drossel 17 in einen oberen Bereich des Druckbehälters 11 geführt. Stromabwärts vom Druckbehälter 11 wird die Abrasivmittelleitung vor der Austrittsdüse 7 wieder mit der Hochdruckleitung 5 zusammengeführt, sodass der Schneidstrahl beispielsweise in einem Mischungsverhältnis von 1:9 Abrasivmittelsuspension und Wasser enthält. Das Mischungsverhältnis ist dabei über das eingangsseitig mit dem Druckbehälter 11 verbundene Drossel bzw. Regelventil 17 regelbar. Bei maximaler Öffnungsstellung des Regelventils 17 ist der Abrasivmittelentnahmefluss maximal und das Mischungsverhältnis maximal. Bei minimaler Öffnungsstellung bzw. Schließstellung (siehe Fig. 7b oder 7c) des Regelventils 17 ist der Abrasivmittelentnahmefluss minimal bzw. null und das Mischungsverhältnis entsprechend gering bzw. enthält der Schneidstrahl 9 dann ausschließlich Wasser.

Es ist nun aus verschiedenen Gründen vorteilhaft, den tatsächlichen Abrasivmittelentnahmefluss zu messen und zu regeln. Zum einen kann für das Schneiden bestimmter Materialien, Werkstücke oder Werkstückabschnitte ein bestimmtes Mischungsverhältnis optimal sein, bei dem nur so viel Abrasivmittel zum Erzielen der Schneidleistung wie nötig entnommen wird. Bei inhomogenen Werkstücken kann die Schneidleistung über das Mischungsverhältnis während des Schneidens angepasst werden. Zum anderen kann das Nachfüllen des Druckbehälters 11 mit Abrasivmittel entsprechend dem Abrasivmittelentnahmefluss so gesteuert werden, dass ständig genügend Abrasivmittelsuspension 13 im Druckbehälter 11 für ein kontinuierliches Schneiden vorhanden ist. In Fig. 7a-c sind jeweils vier verschiedene Füllstände des Abrasivmittels im Druckbehälter 11 durch gestrichelte Kegel angedeutet. Zwischen einem maximalen Füllstandskegel Fₘₐₓ und einem minimalen Füllstandskegel Fₘᵢₙ sind zwei weitere Füllstandskegel F₁ und F₂ gezeigt, wobei Fₘₐₓ>F₁>F₂>Fₘᵢₙ. Es sei an dieser Stelle noch einmal darauf hingewiesen, dass die gesamte Anlage 1 und insbesondere der Druckbehälter 11 vollständig luftfrei sind. Das heißt, dass sich die Füllstandskegel in hochbedrucktem Wasser befinden. Der maximale Füllstandskegel Fₘₐₓ ist dadurch definiert, dass sich bei weiterer Nachfüllung mit Abrasivmittel in den Druckbehälter 11 ein Rückstau in das Nachfüllventil 19 ergeben würde. Der minimale Füllstandskegel Fₘᵢₙ ist dadurch definiert, dass sich bei weiterer Abrasivmittelentnahme der Abrasivmittelanteil der Abrasivmittelsuspension in der ausgangsseitigen Abrasivmittelleitung 70 abnehmen würde.

Wie in Fig. 7a und 7b gezeigt, können Füllstandssensoren 72, 74, 76 am Druckbehälter 11 angeordnet sein, um das Erreichen eines Füllstandskegels zu signalisieren. Die Füllstandssensoren 72, 74, 76 können beispielsweise Ultraschallsensoren, optische Sensoren bzw. Schranken, elektro-magnetische Sensoren oder Sensoren anderer Art sein. Hier sind die Füllstandssensoren 72, 74, 76 Ultraschallsensoren, die ein Erreichen eines Füllstandskegels über eine Veränderung des Körperschalls signalisieren können. Ein oberer Füllstandssensor 72 kann beispielsweise das Erreichen des Füllstandskegels F₁ signalisieren und einen Zeitnehmer starten bzw. einen Zeitpunkt t₁ definieren. Ein unterer Füllstandssensor 74 kann beispielsweise das Erreichen des Füllstandskegels F₂ signalisieren und einen Zeitnehmer nach Δt stoppen bzw. einen Zeitpunkt t₂ definieren. Über die bekannte Geometrie des Druckbehälters 11 und den vertikalen Abstand der Füllstandssensoren 72, 74 kann ein mittlerer Abrasivmittelentnahmefluss ermittelt werden als ΔV/Δt bzw. ΔV/(t₂-t₁). Der dritte unterste Füllstandssensor 76 kann den minimalen Füllstandskegel Fₘᵢₙ signalisieren und sofort eine Absperrung des Absperrventils 15 bewirken, um ein Leersaugen des Druckbehälters 11 zu verhindern. Gemäß Fig. 7b können auch andere Betriebsparameter wie etwa die Pumpendrehzahl der Hochdruckquelle 3 zur Bestimmung des Abrasivmittelentnahmeflusses und dessen Regelung als Regelgröße für das Regelventil 17 herangezogen werden. Wie in Fig. 7c gezeigt, kann der Abrasivmitteldurchfluss bzw. das Mischungsverhältnis mittels eines entsprechenden Sensors 79 auch an der Abrasivmittelleitung 70 bzw. vor der Austrittsdüse 7 bestimmt und als Regelgröße für das Regelventil 17 benutzt werden.

Die Füllstandssensoren 72, 74 können auch dazu genutzt werden, die Nachfüllzyklen zu steuern bzw. zu takten. Beispielsweise kann über dem oberen Füllstandssensor 72 zwischen dem Füllstandskegel F₁ und dem maximalen Füllstandskegel Fₘₐₓ eine Füllung der Schleusenkammer 21 passen. Sinkt der Füllstandskegel unter F₁, kann der obere Füllstandssensor 72 ein Befüllen der Schleusenkammer 21 auslösen, damit diese vollständig befüllt ist, wenn der untere Füllstandssensor 74 den Füllstandskegel F₂ signalisiert und damit ein Nachfüllen aus der befüllten Schleusenkammer 21 in den Druckbehälter 11 auslösen kann. Damit wird verhindert, dass der Füllstandskegel bis auf den minimalen Füllstandskegel Fₘᵢₙ absinkt. Zwischen dem minimalen Füllstandskegel Fₘᵢₙ und dem Füllstandskegel F₂ kann ebenfalls mindestens eine Füllung der Schleusenkammer 21 als Puffer passen. Alternativ zu einem Auslösen des Befüllens der Schleusenkammer 21 bei einem bestimmten Füllstand kann die Schleusenkammer 21 automatisch immer sofort wieder befüllt werden sobald das Nachfüllen des Druckbehälters 11 beendet ist. Dann braucht nur bei dem Füllstandskegel F₂ das Nachfüllen aus der Schleusenkammer 21 ausgelöst werden. Der vertikale Abstand zwischen dem oberen Füllstandssensor 72 und dem unteren Füllstandssensor 74 kann relativ kurz gewählt werden, beispielsweise so kurz, dass ein Absinken zwischen F₁ und F₂ kürzer dauert als ein Befüllvorgang der Schleusenkammer 21. Mit einem kürzeren vertikalen Abstand kann der mittlere Abrasivmittelentnahmefluss ΔV/Δt bzw. ΔV/(t₂-t₁) häufiger ermittelt werden und damit genauer den aktuellen Abrasivmittelentnahmefluss dV/dt wiedergeben.

Fig. 8 bis 12 zeigen verschiedene Möglichkeiten, Abrasivmittel in trockener, nasser, feuchter, suspendierter, gefrorener, pelletierter oder anderer Form in den Nachfülltrichter 25 bzw. direkt in das Befüllventil 23 zu geben. In Fig. 8 ist ein Vorladebehälter 78 vorgesehen, aus dem mittels einer Pumpe 80 Abrasivmittelsuspension in den Nachfülltrichter 25 gefördert wird. Über einen Überlauf 82 am Nachfülltrichter kann beim Beladen des Nachfülltrichters 25 Wasser ablaufen, das durch das absinkende Abrasivmittel verdrängt wird.

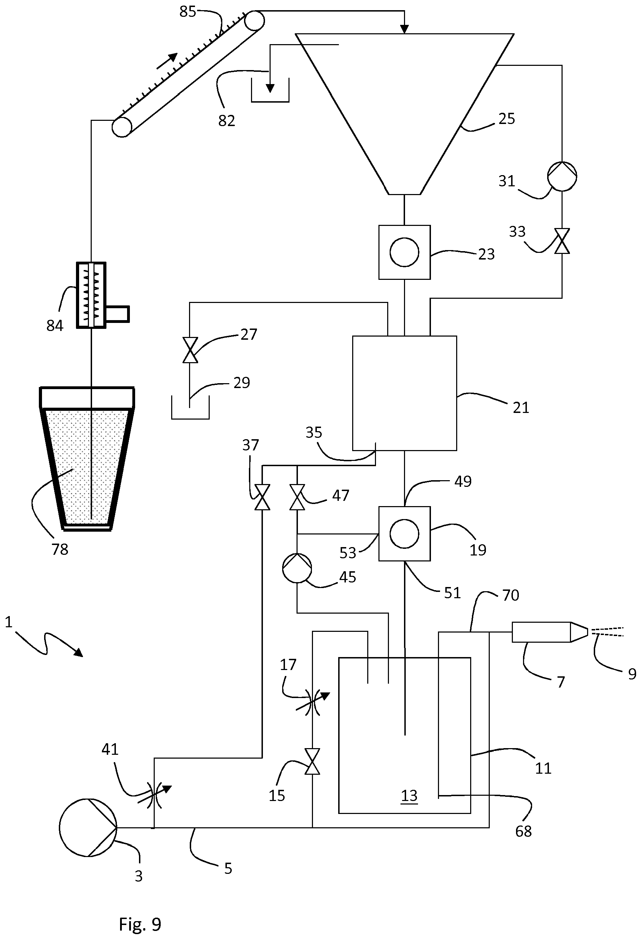

In Fig. 9 ist ein Vorladebehälter 78 vorgesehen, aus dem mittels einer Förderschnecke 84 und/oder eines Förderbands 85 trockenes pulverförmiges oder feuchtes klumpiges Abrasivmittel in den Nachfülltrichter 25 gefördert wird. Über den Überlauf 82 am Nachfülltrichter 25 kann auch hier beim Beladen des Nachfülltrichters 25 Wasser ablaufen, das durch das absinkende Abrasivmittel verdrängt wird. Das Abrasivmittel kann beispielsweise nach einem Schneidprozess aus dem Abwasser des Schneidstrahls 9 wiedergewonnen und aufbereitet sein, sodass es für einen weiteren Schneidprozess benutzbar ist. Der Vorteil dieser Anlage gegenüber bekannten Wasser-Abrasiv-Injektions-Schneidanlagen ist, dass solch ein wiederaufbereitetes Abrasivmittel nicht getrocknet werden muss und in feucht-klumpiger oder beliebiger Form in die Anlage gefüllt werden kann.

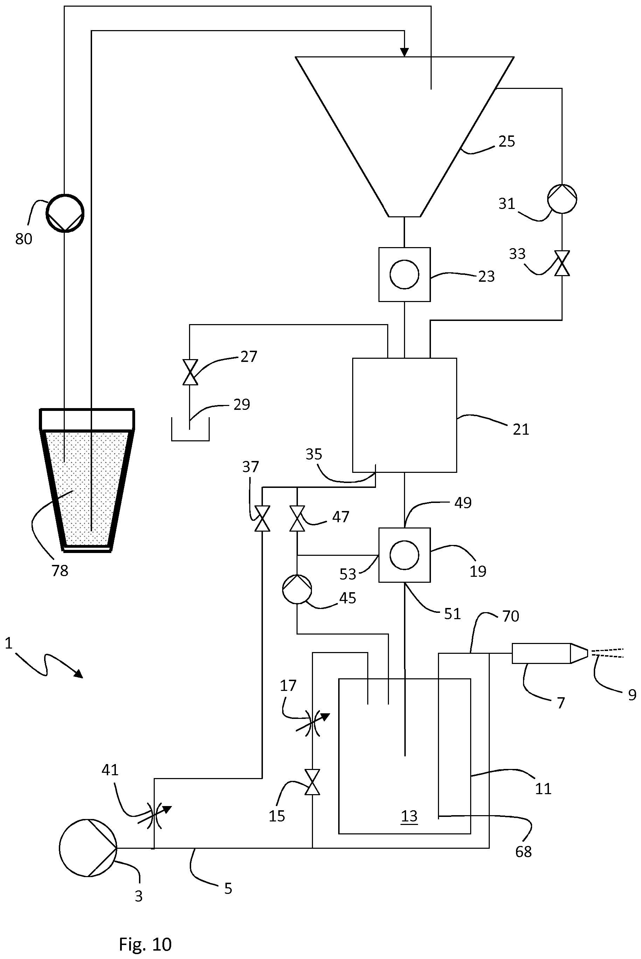

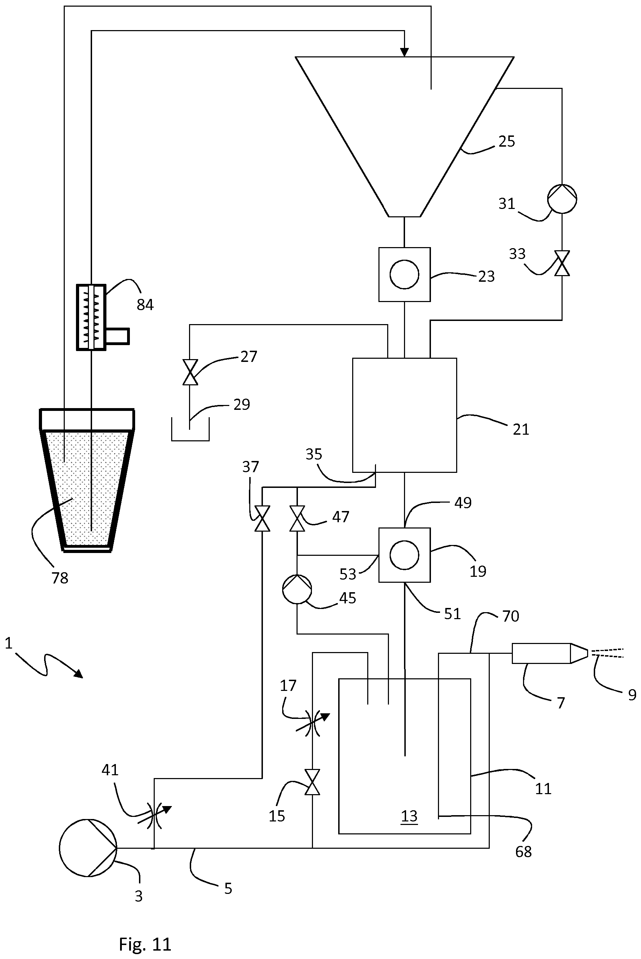

In Fig. 10 ist kein Überlauf 82 vorgesehen, sondern ein Kreislauf zwischen dem Nachfülltrichter 25 und dem Vorladebehälter 78, wobei die Pumpe 80 ausgangsseitig vom Nachfülltrichter 25 den Kreislauf zur Befüllung des Nachfülltrichter 25 mit Abrasivmittel antreibt. Der Nachfülltrichter 25 ist in diesem Fall vorzugsweise geschlossen, sodass die Pumpe 80 Abrasivmittelsuspension aus dem Vorladebehälter 78 saugen kann. Vorteilhaft ist hierbei, dass die Pumpe 80 relativ sauberes Wasser fördert und keine gesättigte Abrasivmittelsuspension wie in Fig. 8. Dadurch wird der Verschleiß in der Pumpe 80 reduziert. Außerdem ist ein Ansaugen der Abrasivmittelsuspension weniger verstopfungsanfällig als ein Drücken. Wie in Fig. 11 gezeigt, kann allerdings auch eine Förderschnecke 84 eingangsseitig zum Nachfülltrichter 25 angeordnet sein, um Abrasivmittel in den Nachfülltrichter 25 zu fördern. Dies ist insbesondere dann vorteilhaft, wenn keine Abrasivmittelsuspension im Vorladebehälter 78 ist, sondern Abrasivmittel als trockenes Pulver oder in feucht-klumpiger Form.

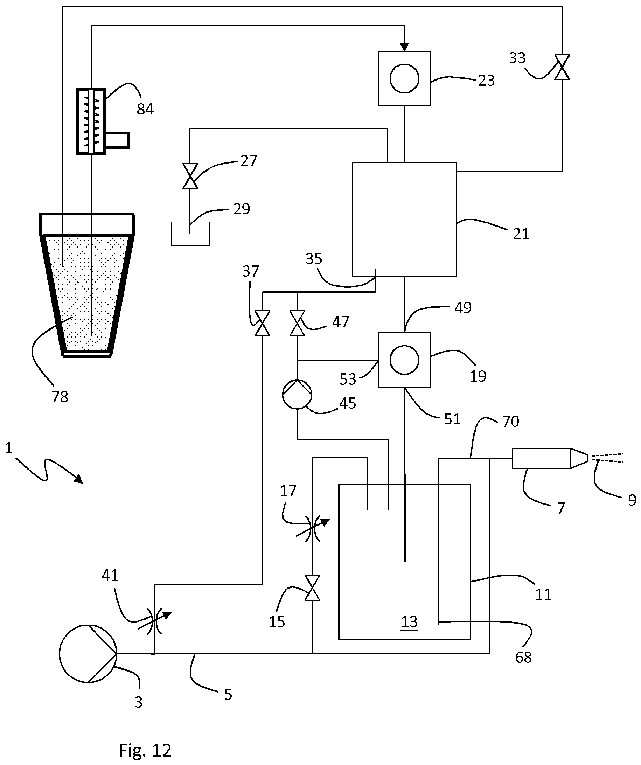

Es kann sogar vollständig auf den Nachfülltrichter 25 verzichtet werden (siehe Fig. 12), wenn das Fördern über eine Förderschnecke 84 oder eine Pumpe 80 schnell genug und kontrolliert direkt in das Befüllventil 23 stattfindet. Über das Pumpenabsperrventil 33 kann das beim Befüllen der Schleusenkammer 21 durch das Abrasivmittel verdrängte Wasser aus der Schleusenkammer 21 in den Nachfülltrichter 25 zurückgeführt werden. Dies kann auch mit einer Pumpe 31 gemäß Fig. 1 bis 5 unterstützt werden, um Abrasivmittel zusätzlich aktiv in die Schleusenkammer 21 zu saugen.

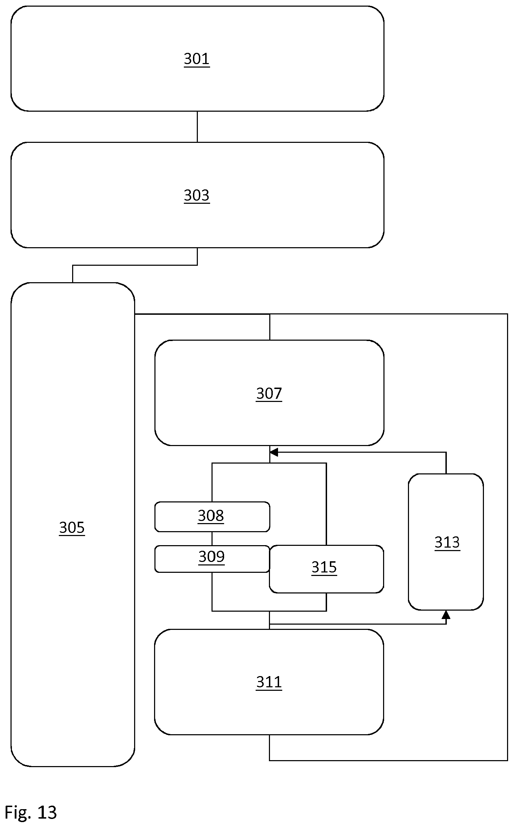

Das Nachfüllen des Abrasivmittels in den Druckbehälter 11 erfolgt gemäß einem Ausführungsbeispiel des hierin offenbarten Verfahrens zum Wasser-Abrasiv-Suspensions-Schneiden portioniert und zyklisch während ein zu bearbeitendes Werkstück kontinuierlich mit dem Schneidstrahl 9 geschnitten werden kann. Fig. 13 illustriert die Verfahrensschritte im zeitlichen Ablauf. In einem ersten Schritt 301 wird Wasser unter hohem Druck in der Hochdruckleitung 5 mittels der Hochdruckquelle 3 bereitgestellt. Damit wird dann auch eine unter Druck stehende Abrasivmittelsuspension in dem Druckbehälter 11 bereitgestellt 303. Damit kann dann bereits ein Werkstück mittels des Hochdruckstrahls 9, der zumindest teilweise die Abrasivmittelsuspension enthält, unter Entnahme der Abrasivmittelsuspension aus dem Druckbehälter 11 geschnitten werden 305. Die Schritte 307 bis 311 dienen dem portionierten und zyklischen Nachfüllen des Druckbehälters 11 mit Abrasivmittel während des kontinuierlichen Scheidens 305. Zunächst wird die unbedruckte Schleusenkammer 21 mit Abrasivmittel oder einer Abrasivmittelsuspension befüllt 307. Während des Befüllens ist die Förderhilfe 45 durch das Förderhilfeabsperrventil 47 von der unbedruckten Schleusenkammer 21 abgesperrt. Sodann wird die Pumpe 31 von der Schleusenkammer 21 abgesperrt 308. Danach wird die Schleusenkammer zumindest teilweise durch Druckentladen des Druckspeichers 39 bedruckt 309, und schließlich der Druckbehälter 11 mit Abrasivmittel oder einer Abrasivmittelsuspension über das Nachfüllventil 19 aus der bedruckten Schleusenkammer 21 nachgefüllt 311. Beim Nachfüllen 311 ist die Förderhilfe 45 über das geöffnete Förderhilfeabsperrventil 47 mit der bedruckten Schleusenkammer 21 fluidverbunden. Nach dem Nachfüllen 311 werden das Förderhilfeabsperrventil 47 sowie das Bedruckungsventil 37 und das Nachfüllventil 19 abgesperrt, um die Schleusenkammer 21 über das Druckablassventil 27 in den Ablauf 29 für den nächsten Befüllschritt druckentlasten zu können.

Während des Befüllens 307 der Schleusenkammer 21 oder während des Nachfüllens 311 des Druckbehälters 11 kann der Druckspeicher über die Drossel 41 aus der Hochdruckleitung 5 druckbeladen werden 313. Zeitgleich startend mit dem Bedrucken 309 der Schleusenkammer 21 aus dem Druckspeicher 39 kann die Schleusenkammer 21 zumindest teilweise über die Drossel 41 aus der Hochdruckleitung 5 bedruckt werden 315. Dieses langsame gedrosselte Bedrucken 315 aus der Hochdruckleitung 5 kann länger andauern als das schnelle Bedrucken 309 durch das Druckentladen des Druckspeichers 39. Mit anderen Worten kann das Bedrucken 309 der Schleusenkammer 21 durch Druckentladen eines Druckspeichers 39 während eines ersten Zeitfensters A und das Bedrucken 315 der Schleusenkammer 21 der Hochdruckleitung 5 während eines zweiten Zeitfensters B erfolgen, wobei sich das erste Zeitfenster A und das zweite Zeitfenster B zumindest teilweise überschneiden, vorzugsweise an ihrem Beginn.

Das Bedrucken 309 der Schleusenkammer 21 durch Druckentladen des Druckspeichers kann derart schnell erfolgen, dass in der Schleusenkammer 21 befindliches Abrasivmittel durch einen Druckstoß aufgelockert wird. Dabei erfolgt das Bedrucken 309 der Schleusenkammer durch Druckentladen des Druckspeichers 39 vorzugsweise in einen unteren Bereich der Schleusenkammer 21, da etwaige Verstopfungen von Abrasivmittel in einem unteren Bereich wahrscheinlicher sind als in einem oberen Bereich.

Optional ist der Bedruckungseingang 35 der Schleusenkammer 21 vom Druckspeicher 39 und/oder der Hochdruckleitung 5 während des Befüllens 307 und des Nachfüllens 311 abgesperrt. Das Druckbeladen 313 der Druckspeicher 39 kann somit während des Befüllens 307 und/oder des Nachfüllens 311 erfolgen. Dabei kann Energie über eine Feder- oder Fluidkompression im Druckspeicher 39 gespeichert werden, der beispielsweise als Feder- oder Blasenspeicher ausgestaltet sein kann. Das Befüllen 307, das Bedrucken 309 und das Nachfüllen 311 können zyklisch ablaufen während das Schneiden 305 kontinuierlich durchgeführt werden kann.

Optional kann der Druckspeicher 39 nach dem Bedrucken 309 der Schleusenkammer 21 durch Druckentladen des Druckspeichers 39 von der Hochdruckleitung 5 zunächst mittels des Druckspeicherventils 43 abgesperrt werden. Das Druckspeicherventil 43 kann vorzugsweise erst dann zum Druckbeladen des Druckspeichers 39 wieder geöffnet werden, wenn die Schleusenkammer 21 über die Drossel 41 aus der Hochdruckleitung 5 bedruckt wurde.

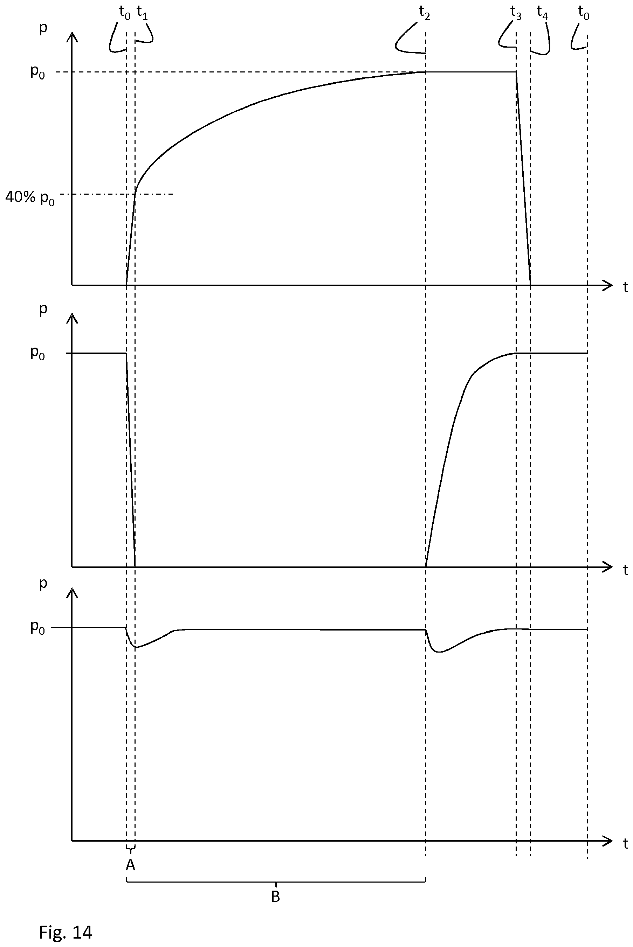

Fig. 14 verdeutlicht einen beispielhaften Verlauf des Drucks p über die Zeit t in der Schleusenkammer 21 (oben), im Druckspeicher 39 (mittig) und in der Hochdruckleitung 5 (unten). Der Druck in der unbedruckten Schleusenkammer 21 ist zunächst der Umgebungsdruck, der hier auf der Nulllinie liegt. Die Schleusenkammer 21 kann in dieser unbedruckten Phase vor dem Start des Bedruckens 309 zum Zeitpunkt t₀ befüllt werden 307.

Das Bedrucken 309, 315 beginnt zum Zeitpunkt t₀. Während des ersten kurzen Zeitfensters A=t₁-t₀ wird nun die Schleusenkammer 21 auf bis zu 40% des nominellen Hochdrucks p₀ aus der Druckentladung des Druckspeichers 39 bedruckt 309. Der Druckspeicher 39 ist dann bei t₁ bis auf ein Minimum entladen und wird danach über das Druckspeicherventil 43 gemäß dem zweitem Ausführungsbeispiel in Fig. 2 abgesperrt. Die Schleusenkammer 21 wird allerdings langsam innerhalb des zweiten längeren Zeitfensters B=t₂-t₀ weiter über die Drossel 41 aus der Hochdruckleitung 5 bedruckt 315 bis der nominelle Hochdruck p₀ bei t₂ erreicht ist. Das Bedrucken 309, 315 der Schleusenkammer 21 kann 5 bis 10 Sekunden dauern. Sobald der nominelle Hochdruck p₀ in der Schleusenkammer 21 bei t₂ erreicht ist, kann das Nachfüllen 311 beginnen und der Druckbehälter 39 gleichzeitig wieder druckbeladen 313 werden. In der Ausführungsform gemäß Fig. 3 ohne Druckspeicher 39 wird die Schleusenkammer 21 komplett über die Drossel 41 über das Zeitfenster B hinweg aus der Hochdruckleitung 5 bedruckt.

Zwischen t₂ und t₃ ist das Nachfüllventil 19 geöffnet, sodass Abrasivmittel in den Druckbehälter 11 strömen kann. Zum Zeitpunkt t₃ ist das Abrasivmittel vollständig aus der Schleusenkammer 21 in den Druckbehälter 11 geströmt und der Nachfüllschritt 311 abgeschlossen. Zum Befüllen 307 kann der Druck aus der Schleusenkammer 21 relativ schnell über das Druckablassventil 27 in den Ablauf 29 abgelassen werden bis bei t₄ wieder Niederdruck in der Schleusenkammer 21 herrscht. Dann kann ein neuer Nachfüllzyklus beginnend mit dem Befüllen 307 der Schleusenkammer 21 starten. Der Druckspeicher 39 wird vorzugsweise möglichst langsam und gedrosselt von t₂ an aus der Hochdruckleitung 5 wieder druckbeladen, um bei t₀ wieder für das Bedrucken 309 voll druckgeladen zu sein. Der untere Graph zeigt den Druckabfall in der Hochdruckleitung 5 beim Öffnen des Bedruckungsventils 37 bei t₀ bzw. des Druckspeicherventils 43 bei t₂. Die Amplitude des Druckabfalls ist jeweils über die Drossel 41 auf ein Maß reduziert, bei dem die Schneidleistung des Schneidstrahls 9 nicht signifikant beeinträchtigt ist.

In Figuren 15a und 15b ist das Nachfüllventil 19 im Querschnitt detaillierter in jeweils unterschiedlichen Öffnungsstellungen gezeigt. Da das Nachfüllventil 19 unter Hochdruck auf dem Ventileingang 49 und dem Ventilausgang 51 betätigt werden muss, ist das störungsfreie Betätigen des Nachfüllventils 19 eine technische Herausforderung. Das zuverlässige Öffnen und Schließen des Nachfüllventils 19 wird nun vorzugsweise durch Unteraspekte gewährleistet, die jeder für sich allein oder in beliebiger Kombination der Unteraspekte dazu beitragen, dass das Nachfüllventil 19 nicht verstopft oder durch das Abrasivmittel blockiert.

Das Nachfüllventil 19, das vorzugsweise als Kugelhahn ausgebildet ist, hat eine vertikale Durchflussrichtung D von oben nach unten und weist einen zentral angeordneten und um eine zur Durchflussrichtung D senkrechte Drehachse R drehbaren Ventilkörper 67 mit sphärischen Außenflächen auf. Der Ventilkörper 67 weist eine zentrische Durchbrechung 69 auf, die in den in Fig. 15a und Fig. 15b gezeigten Öffnungsstellungen parallel zur Durchflussrichtung D und senkrecht zur Drehachse R verläuft. Die erste Öffnungsstellung gemäß Fig. 15a unterscheidet sich von der zweiten Öffnungsstellung gemäß Fig. 15b dadurch, dass der Ventilkörper 67 um 180° bezüglich der Drehachse R gedreht ist. Der Ventilkörper 67 sitzt in einem Ventilraum 71 zwischen einem oberen Ventilsitz 73 und einem unteren Ventilsitz 75. Der obere Ventilsitz 73 bildet den Ventileingang 49 und der untere Ventilsitz 75 den Ventilausgang 51. Der obere Ventilsitz 73 und der untere Ventilsitz 75 sind koaxial zueinander und zur vertikalen Durchflussrichtung D angeordnet. Der Ventilraum 71 ist über den lateralen Spüleinlass 66 und über den diametral dem Spüleinlass 66 gegenüberliegenden Spülauslass 63, vorzugsweise bei vollständig drucklosem Nachfüllventil 19, durchspülbar.

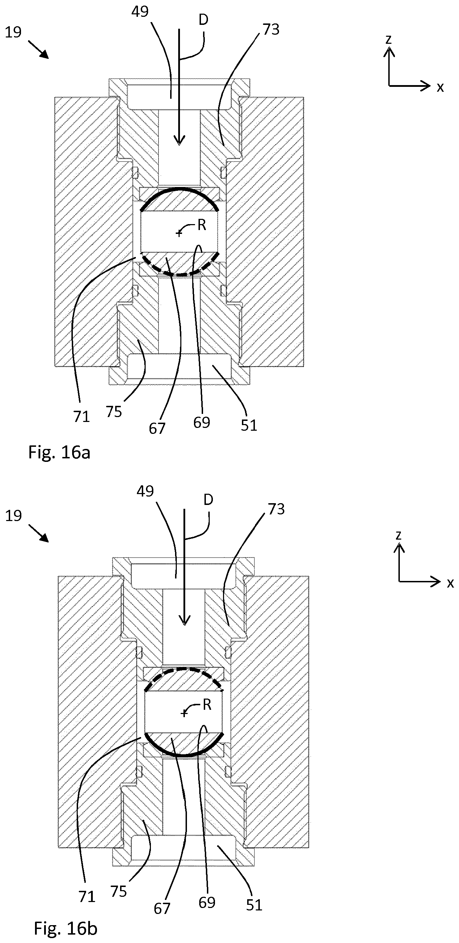

Erfindungsgemäß ist das Nachfüllventil 19 dazu in der Lage, eine erste Schließstellung (Fig. 16a), eine erste Öffnungsstellung (Fig. 15a) und eine zweite Öffnungsstellung (Fig. 15b) einzunehmen, wobei in der ersten Schließstellung (Fig. 16a) die Schleusenkammer 21 vom Druckbehälter 11 fluidgetrennt ist und in der ersten sowie der zweiten Öffnungsstellung (Fig. 15a-b) die Schleusenkammer 21 mit dem Druckbehälter 11 fluidverbunden ist. Die erste Öffnungsstellung und die zweite Öffnungsstellung sind wegen der Symmetrie des Ventilkörpers 67 im Wesentlichen kaum unterscheidbar. Der Ventilkörper 67 kann beliebig weit in eine Richtung um die Drehachse R gedreht werden, sodass eine Umkehr der Drehrichtung prinzipiell nicht nötig ist und der Ventilkörper 67 ausschließlich in eine Drehrichtung betätigt werden kann, sofern das dafür benötigte Drehmoment einen bestimmten Schwellenwert nicht überschreitet. Die erste Schließstellung aus Fig. 16a liegt hier bei 90° zwischen der ersten Öffnungsstellung und der zweiten Öffnungsstellung. In diesem Fall gibt es auch eine zweite Schließstellung (siehe Fig. 16b), die gegenüber der ersten Schließstellung um 180° um die Drehachse R gedreht ist. Die Durchbrechung 69 verläuft in den in Fig. 16a und Fig. 16b gezeigten Schließstellungen sowohl senkrecht zur Durchflussrichtung D als auch senkrecht zur Drehachse R, sodass der Ventilkörper 67 den Ventileingang 49 am oberen Ventilsitz 73 abdichtet und den Ventilausgang 51 am unteren Ventilsitz 75. Hier sind der optionale Spüleinlass 66 und Spülauslass 63 nicht gezeigt, können aber vorgesehen sein. Damit bestehen also für den Ventilkörper 67 immer zwei Möglichkeiten zur Bewegungsrichtung, das Nachfüllventil 19 entweder zur ersten Öffnungsstellung/Schließstellung oder zur zweiten Öffnungsstellung/Schließstellung hin zu öffnen bzw. zu schließen, falls eine Bewegungsrichtung momentan ein zu hohes Drehmoment erfordert. Ist also eine Bewegungsrichtung verstopft oder blockiert, so kann der Ventilkörper 67 in die andere Bewegungsrichtung bewegt werden und das Ventil 19 in die andere Öffnungsstellung/Schließstellung gebracht werden. Dabei kann durch die Umkehrung als positiver Nebeneffekt die Verstopfung bzw. Blockade aufgelöst werden, sodass bei der nächsten Betätigung die zuvor blockierte Bewegungsrichtung wieder frei ist. Das Nachfüllventil 19 kann auch durch mehrmaliges Hin- und Herdrehen freigerüttelt werden, beispielsweise falls der Ventilkörper 67 in beide Bewegungsrichtungen nur schwer zu betätigen ist.

Erfindungsgemäß ist der Ventilraum 71 in einer Schließstellung des Ventilkörpers 67 bedruckbar. Gemäß Fig. 17a-b weist der Ventilraum 71 dazu den Druckeinlass 53 auf, über den der Ventilraum 71 in einer Schließstellung des Ventilkörpers 67 bedruckbar ist. Der Druckeinlass 53 ist hier in der yz-Ebene koaxial zu einer Servomotorwelle 86 dieser gegenüberliegend angeordnet. Alternativ dazu kann der Druckeinlass 53 auch in der dazu senkrechten xz-Ebene liegen und ggf. je nach Bedarf als Spüleinlass 66 verwendet werden. Über die Servomotorwelle 86 wird der Ventilkörper 67 um die Drehachse R gedreht. Bei Inbetriebnahme bzw. Wiederinbetriebnahme der zunächst drucklosen Anlage 1 ist der Ventilraum 71 anfänglich drucklos. Wird der Druckbehälter 11 und die Schleusenkammer 21 dann auf etwa 2.000 bar bedruckt, kann der Ventilkörper 67 von den Ventilsitzen 73, 75 wegen des eingangsseitigen sowie ausgangsseitigen Hochdrucks bei gleichzeitigem Niederdruck im Ventilraum 71 eingeklemmt werden und nur schwer oder gar nicht mehr beweglich sein. Mittels des Druckeinlasses 53 kann die Druckdifferenz zwischen dem Ventilraum 71 und dem Ventileingang 49 bzw. dem Ventilausgang 51 bei Inbetriebnahme weitgehend reduziert werden, sodass der Ventilkörper 67 nicht durch den hohen Druck eingeklemmt wird. In Fig. 17b ist der obere Ventilsitz 73 gemäß einem Unteraspekt über eine Einstellvorrichtung einstellbar gezeigt. Der obere Ventilsitz 73 ist dabei über ein Außengewinde mittels einer Drehung um die Durchflussrichtung D in z-Richtung positionierbar. Die Drehung kann durch von außen in Angriffsflächen 77 angreifende Hebel 88 manuell oder motorgetrieben durchgeführt werden.

Gemäß einem Unteraspekt ist der Ventilraum wie beispielsweise in Fig. 15a-b gezeigt durchspülbar. Dabei weist das Nachfüllventil den Spüleinlass 66 und den Spülauslass 63 auf, über welche der Ventilraum 71 durchspülbar ist. Der Druckeinlass 53 kann dabei wahlweise als Spüleinlass 66 dienen. Dies ist besonders vorteilhaft in Kombination mit dem Druckeinlass 53, da ein Spüldurchgang bei drucklosem Ventilraum 71 bzw. vollständig druckloser Anlage 1 durchgeführt werden kann und danach bei Wiederinbetriebnahme der Anlage 1 der Ventilraum 71 über den Druckeinlass 53 wieder bedruckt werden kann, damit der Ventilkörper 67 vom hohem Druck nicht eingeklemmt wird.

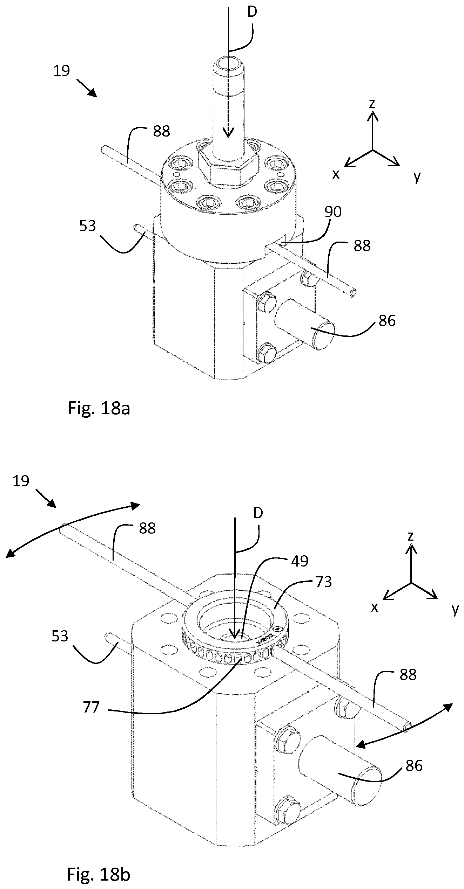

Gemäß einem Unteraspekt weist das Nachfüllventil den eingangsseitigen oberen Ventilsitz 73 und den ausgangsseitigen unteren Ventilsitz 75 auf, wobei mindestens einer der Ventilsitze 73, 75 verstellbar ist, sodass der Abstand der Ventilsitze 73, 75 zueinander einstellbar ist. Somit kann das Nachfüllventil 19 optimal eingestellt werden, um einerseits dicht zu sein und andererseits nicht zu blockieren. Es kann bei Inbetriebnahme der Anlage, bei Temperaturschwankungen, einer hartnäckigen Blockade durch Abrasivmittel und/oder materialverschleißbedingt ein Nachjustieren des Abstands der Ventilsitze 73, 75 zueinander vorteilhaft sein. Um dafür die Anlage nicht abschalten und auseinander bauen zu müssen, kann wie in Fig. 18a gezeigt eine Werkzeugöffnung 90 vorgesehen sein, durch die ein Werkzeug in Form eines Hebels 88 greifen kann, um den mindestens einen verstellbaren Ventilsitz 73 einzustellen. Vorzugsweise wird allerdings das Einstellen des Ventilsitzes 73 in einer Serviceprozedur bei druckloser Anlage 1 durchgeführt. In diesem Beispiel ist der obere eingangsseitige Ventilsitz 73 über ein Außengewinde axial entlang der Durchflussrichtung D verstellbar. Hebel 88 können von außen an umfangseitig angeordnete Angriffsflächen 77 (siehe Fig. 18b) angesetzt werden, um den Ventilsitz 73 zu drehen. Das Nachfüllventil 19 muss also nicht von der Anlage 1 getrennt oder abgebaut werden. Die bedienende Person kann somit manuell sofort eingreifen, um einen kontinuierlichen Betrieb sicherzustellen, oder die Anlage 1 abschalten und entdrucken, um das Einstellen des Ventilsitzes 73 als Serviceprozedur durchzuführen. Alternativ oder zusätzlich kann das Nachjustieren auch automatisch gesteuert und/oder geregelt über einen Motor erfolgen.

Der Ventilkörper 67 wird vorzugsweise über einen nicht gezeigten Servomotor kontrolliert um die Drehachse R gedreht. Dabei kann das ggf. gemessene Drehmoment oder die Leistungsaufnahme des Motors überwacht werden, sodass bei Überschreitung eines Schwellenwertes die Drehrichtung zur anderen Öffnungsstellung oder Schließstellung hin umgestellt werden kann. Alternativ oder zusätzlich können Drehmoment- oder Leistungsspitzen über einen bestimmten Zeitraum aufgezeichnet werden und basierend auf dieser Aufzeichnung ein Fehler- oder Wartungsfall signalisiert werden. Beispielsweise kann der Bedarf für ein Nachjustieren des Ventilsitzes 73 angezeigt werden.

Fig. 19a-b zeigen zwei Ausführungsformen von spülbaren Nadelventilen, die beispielsweise als eines oder mehrere der Absperrventile 15, 27, 33, 37, 47 oder an anderer Stelle in der Anlage 1 verwendet werden können. Das Nadelventil gemäß Fig. 19a wird vorzugsweise dort eingesetzt, wo das Nadelventil nicht unter Hochdruck öffnen oder schließen muss, z.B. als Pumpenabsperrventil 33 im Kreislauf zur Unterstützung der Befüllung der Schleusenkammer 21. Das Pumpenabsperrventil 33 weist dabei einen Hochdruckeingang 92 auf, der mit einer zum Hochdruckeingang 92 koaxial angeordneten und axial positionierbaren Nadel 94 bezüglich eines Niederdruckausgangs 95 absperrbar ist. Die Nadel 94 weist an einem dem Hochdruckeingang 92 zugewandten Ende eine konische Schließfläche 96 auf, die zum Absperren gegen einen Ventilsitz 98 gedrückt werden kann. Sobald der Hochdruckeingang 92 abgesperrt ist, kann auf den Hochdruckeingang 92 Hochdruck gegeben werden, ohne dass dieser über den Niederdruckausgang 95 entweicht. Wenn kein Hochdruck am Hochdruckeingang 92 herrscht, kann das Pumpenabsperrventil 33 geöffnet werden, um einen Durchfluss bei Niederdruck vom Hochdruckeingang 92 zum Niederdruckausgang 95 zuzulassen.

Das Nadelventil gemäß Fig. 19a-b weist auch einen Spüleinlass 100 auf, über den das geöffnete Nadelventil durchgespült werden kann, wobei Spülflüssigkeit, d.h. Wasser oder Wasser mit Reinigungszusätzen, über den Niederdruckausgang 95 ausfließen kann. Durch diesen Durchfluss von Spülflüssigkeit kann insbesondere der Ventilsitz 98 und die Schließfläche 96 von Abrasivmittelresten befreit werden, um ein sauberes Schließen unter möglichst wenig Materialverschleiß zu gewährleisten. Vorzugsweise kann das Nadelventil kurz vor einem Schließvorgang des Nachfüllventils 19 gespült werden. Fig. 19b zeigt ein Nadelventil mit einem Rückschlagventil 102 am Spüleinlass 100. Das Rückschlagventil 102 verhindert einen Rückfluss in den Spüleinlass 100 und lässt nur einen Durchfluss von Spülflüssigkeit in Richtung des Nadelventils zu. Dies ist dann sinnvoll, wenn das Nadelventil beispielsweise als eines oder mehrere der Absperrventile 15, 27, 37, 47 verwendet wird, da dort das Ventil geöffnet wird, wenn am Hochdruckeingang 92 Hochdruck herrscht. Dieser Hochdruck würde sich ohne das Rückschlagventil 102 zumindest teilweise in den Spüleinlass 100 entladen und zu einem Rückfluss in den Spüleinlass 100 führen. Dies verhindert das Rückschlagventil 102 und ermöglicht somit einen sauberen Druckablass über den Niederdruckausgang 95. Der Niederdruckausgang 95 kann in diesem Fall auch ein Hochdruckausgang 95 sein. Beispielsweise ist der Niederdruckausgang 95 im Falle des Druckablassventils 27 mit einem Ablauf 29 verbunden. Im Falle des Bedruckungsventils 37 ist der Hochdruckausgang 95 jedoch mit dem Bedruckungseingang 35 der Schleusenkammer 21 verbunden, um diese mit Hochdruck zu beaufschlagen.

Vorzugsweise sind die Nadelventile pneumatisch über einen Anpressteller (nicht gezeigt) betrieben. Um dem auf die Nadelspitze in Form der konischen Schließfläche 96 wirkenden Hochdruck entgegenzuwirken, kann ein Luftdruck auf den sehr viel größeren Anpressteller gegeben werden, sodass mit wenigen bar Luftdruck das Nadelventil geschlossen und gegen einen Hochdruck von 1.500 bar und mehr dicht gehalten werden kann.

Die nummerierten Bezeichnungen der Bauteile oder Bewegungsrichtungen als "erste", "zweite", "dritte" usw. sind hierin rein willkürlich zur Unterscheidung der Bauteile oder Bewegungsrichtungen untereinander gewählt und können beliebig anders gewählt werden. Es ist damit kein Bedeutungsrang verbunden.

Die beschriebenen Ausführungsformen sind als illustrative Beispiele zu verstehen und stellen keine abschließende Liste von möglichen Ausführungsformen dar.

### Bezugszeichenliste

- 1 -: Wasser-Abrasiv-Suspensions-Schneidanlage
- 3 -: Hochdruckquelle
- 5 -: Hochdruckleitung
- 7 -: Austrittsdüse
- 9 -: Schneidstrahl
- 11 -: Druckbehälter
- 13 -: Wasser-Abrasivmittel-Suspension
- 15 -: Absperrventil
- 17 -: Drossel
- 19 -: Nachfüllventil
- 21 -: Schleusenkammer
- 23 -: Befüllventil
- 25 -: Nachfülltrichter
- 27 -: Druckablassventil
- 29 -: Ablauf
- 31 -: Pumpe
- 33 -: Pumpenabsperrventil
- 35 -: Bedruckungseingang
- 37 -: Bedruckungsventil
- 39 -: Druckspeicher
- 41 -: Drossel
- 42 -: Drossel
- 43 -: Druckspeicherventil
- 45 -: Förderhilfe
- 47 -: Förderhilfeabsperrventil
- 49 -: Ventileingang
- 51 -: Ventilausgang
- 53 -: Druckeinlass
- 55 -: Spülquelle
- 57 -: erstes Spülventil
- 59 -: zweites Spülventil bzw. Spülauslassventil
- 61 -: drittes Spülventil
- 63 -: Spülauslass
- 65 -: Ablauf
- 66 -: Spüleinlass
- 67 -: Ventilkörper
- 68 -: Entnahmestelle
- 69 -: Durchbrechung
- 70 -: Abrasivmittelleitung
- 71 -: Ventilraum
- 72 -: Füllstandssensor
- 73 -: eingangsseitiger Ventilsitz
- 74 -: Füllstandssensor
- 75 -: ausgangsseitiger Ventilsitz
- 76 -: Füllstandssensor
- 77 -: Angriffsflächen
- 78 -: Vorladebehälter
- 80 -: Pumpe
- 82 -: Überlauf
- 84 -: Förderschnecke
- 85 -: Förderband
- 86 -: Servomotorwelle
- 88 -: Hebel
- 90 -: Werkzeugöffnung
- 92 -: Hochdruckeingang
- 94 -: Nadel
- 95 -: Niederdruckausgang/Hochdruckausgang
- 96 -: konische Schließfläche
- 98 -: Ventilsitz
- 100 -: Spüleinlass
- 102 -: Rückschlagventil
- 301 -: Bereitstellen von Wasser unter hohem Druck in der Hochdruckleitung
- 303 -: Bereitstellen einer unter Druck stehenden Abrasivmittelsuspension in dem Druckbehälter
- 305 -: Schneiden eines Materials mittels eines Hochdruckstrahls
- 307 -: Befüllen einer unbedruckten Schleusenkammer mit Abrasivmittel oder einer Wasser-Abrasivmittel-Suspension
- 308 -: Absperren der Pumpe von der Schleusenkammer
- 309 -: Bedrucken der Schleusenkammer durch Druckentladen des Druckspeichers
- 311 -: Nachfüllen des Druckbehälters mit Abrasivmittel
- 313 -: Druckbeladen des Druckspeichers
- 315 -: Bedrucken der Schleusenkammer über die Drossel aus der Hochdruckleitung
- A -: erstes Zeitfenster
- B -: zweites Zeitfenster
- R -: Drehachse
- D -: Durchflussrichtung
- F₁ -: Füllstandskegel
- F₂ -: Füllstandskegel
- Fₘₐₓ -: maximaler Füllstandskegel
- Fₘᵢₙ -: minimaler Füllstandskegel

## Patentansprüche

1. Wasser-Abrasiv-Suspensions-Schneidanlage (1) mit
- einem Druckbehälter (11) zum Bereitstellen (301) einer unter Druck stehenden Wasser-Abrasivmittel-Suspension (13),
- einer Schleusenkammer (21), und
- einem Nachfüllventil (19) zum Nachfüllen von Abrasivmittel über die Schleusenkammer (21) in den Druckbehälter (11), wobei das Nachfüllventil (19) einen Ventileingang (49), einen Ventilausgang (51), einen zwischen dem Ventileingang (49) und dem Ventilausgang (51) angeordneten Ventilraum (71) und einem in dem Ventilraum (71) befindlichen Ventilkörper (67) aufweist, wobei der Ventileingang (49) mit der Schleusenkammer (21) und der Ventilausgang (51) mit dem Druckbehälter (11) verbunden ist, **dadurch gekennzeichnet, dass**
das Nachfüllventil (19) eine erste Schließstellung, eine erste Öffnungsstellung und eine zweite Öffnungsstellung aufweist, wobei in der ersten Schließstellung die Schleusenkammer (21) vom Druckbehälter (11) fluidgetrennt ist und in der ersten sowie der zweiten Öffnungsstellung die Schleusenkammer (21) mit dem Druckbehälter (11) fluidverbunden ist, wobei der Ventilraum (71) einen Druckeinlass (53) aufweist, der mit einem Bypass einer Druckleitung verbunden ist, mit der auch der Druckbehälter (11) und/oder die Schleusenkammer (21) bedruckt wird, wobei der Ventilraum (71) in der Schließstellung des Ventilkörpers (67) über den Druckeinlass (53) zur Reduzierung einer Druckdifferenz zwischen dem Ventilraum (71) und dem Ventileingang (49) und/oder Ventilausgang (51) bedruckbar ist.

2. Wasser-Abrasiv-Suspensions-Schneidanlage (1) nach Anspruch 1, wobei der Ventilkörper (67) von der ersten Schließstellung über eine Drehung in einer ersten Richtung in die erste Öffnungsstellung und über eine Drehung in einer zweiten Richtung in die zweite Öffnungsstellung überführbar ist.

3. Wasser-Abrasiv-Suspensions-Schneidanlage (1) nach Anspruch 2, wobei der Ventilkörper (67) eine zweite Schließstellung aufweist, wobei der Ventilkörper (67) von der zweiten Schließstellung über eine Drehung in der ersten Richtung in die zweite Öffnungsstellung und über eine Drehung in der zweiten Richtung in die erste Öffnungsstellung überführbar ist.

4. Wasser-Abrasiv-Suspensions-Schneidanlage (1) nach Anspruch 2 oder 3, wobei der Ventilkörper (67) durch eine 180°-Drehung von der ersten Öffnungsstellung in die zweite Öffnungsstellung überführbar ist.

5. Wasser-Abrasiv-Suspensions-Schneidanlage (1) nach einem der vorhergehenden Ansprüche, wobei das Nachfüllventil (19) ein Kugelhahn ist, wobei der Ventilkörper (67) im Wesentlichen kugelförmig mit einer axialen Durchbrechung (69) ist, wobei der Ventileingang (49) und der Ventilausgang (51) auf diametral gegenüberliegenden Seiten des Ventilkörpers (67) angeordnet sind, wobei in der ersten und der zweiten Öffnungsstellung die axiale Durchbrechung (69) koaxial zum Ventileingang (49) und Ventilausgang (51) liegt.

6. Wasser-Abrasiv-Suspensions-Schneidanlage (1) nach Anspruch 5, wobei der Ventilkörper (67) um eine zur axialen Durchbrechung (69) im Wesentlichen senkrechte Drehachse (R) drehbar ist.

7. Wasser-Abrasiv-Suspensions-Schneidanlage (1) nach einem der vorhergehenden Ansprüche, wobei der Ventilkörper (67) über einen Motor gesteuert antreibbar ist.

8. Wasser-Abrasiv-Suspensions-Schneidanlage nach Anspruch 7, wobei eine Antriebsrichtung und/oder eine Antriebsgeschwindigkeit und/oder ein Antriebsmoment des Motors abhängig von einem zum Antreiben des Ventilkörpers (67) benötigten Drehmoment oder mindestens einem mit dem benötigten Drehmoment korrelierenden Parameter geregelt sind.

9. Wasser-Abrasiv-Suspensions-Schneidanlage (1) nach Anspruch 8, wobei eine Leistungsaufnahme des Motors einer des mindestens einen mit dem benötigten Drehmoment korrelierenden Parameters ist.

10. Wasser-Abrasiv-Suspensions-Schneidanlage (1) nach einem der Ansprüche 7 bis 9, wobei der Motor derart geregelt ist, dass bei Überschreitung eines Schwellenwertes für ein zum Antreiben des Ventilkörpers (67) benötigtes Drehmoment oder eines Schwellenwertes für mindestens einen mit dem benötigten Drehmoment korrelierenden Parameter die Antriebsrichtung geändert wird.

11. Wasser-Abrasiv-Suspensions-Schneidanlage (1) nach einem der Ansprüche 7 bis 10, wobei das Nachfüllventil (19) eine zweite Schließstellung zwischen der zweiten Öffnungsstellung und der ersten Öffnungsstellung aufweist, wobei der Motor derart geregelt ist, dass bei Nicht-Überschreitung eines Schwellenwertes für das zum Antreiben des Ventilkörpers (67) benötigte Drehmoment oder eines Schwellenwertes für mindestens einen mit dem benötigten Drehmoment korrelierenden Parameter die Antriebsrichtung gleich bleibt.

12. Wasser-Abrasiv-Suspensions-Schneidanlage (1) nach einem der Ansprüche 7 bis 11, mit einer Überwachungseinheit, die dazu ausgestaltet ist, ein zum Antreiben des Ventilkörpers (67) benötigtes Drehmoment oder mindestens einen mit dem benötigten Drehmoment korrelierenden Parameter über mindestens ein Zeitfenster hinweg kontinuierlich oder diskret zu überwachen, um Verschleiß zu erkennen oder einen Fehler- bzw. Wartungsfall anzuzeigen.

13. Wasser-Abrasiv-Suspensions-Schneidanlage (1) nach einem der vorhergehenden Ansprüche, wobei der Ventilraum (71) einen Spüleinlass (53) und einen Spülauslass (63) aufweist, über welche der Ventilraum (71) durchspülbar ist.

14. Wasser-Abrasiv-Suspensions-Schneidanlage nach Anspruch 13, wobei der Spülauslass (63) über ein Spülauslassventil (59) verschließbar ist und der Ventilraum (71) über den Spüleinlass (53) bedruckbar ist, wenn das Spülauslassventil (59) geschlossen ist.

15. Wasser-Abrasiv-Suspensions-Schneidanlage (1) nach einem der vorhergehenden Ansprüche, wobei das Nachfüllventil (19) einen eingangsseitigen Ventilsitz (73) und einen ausgangsseitigen Ventilsitz (75) aufweist, wobei mindestens einer der Ventilsitze (73, 75) verstellbar ist, sodass der Abstand der Ventilsitze (73, 75) zueinander einstellbar ist.

16. Wasser-Abrasiv-Suspensions-Schneidanlage (1) nach Anspruch 16, wobei das Nachfüllventil (19) eine Werkzeugöffnung aufweist, durch die ein Werkzeug greifen kann, um den mindestens einen verstellbaren Ventilsitz (73, 75) einzustellen.

17. Wasser-Abrasiv-Suspensions-Schneidanlage (1) nach Anspruch 17, wobei der mindestens eine verstellbare Ventilsitz (73, 75) über einen durch die Werkzeugöffnung eingeführten Hebel oder Schlüssel drehbar und somit über ein Gewinde axial verstellbar ist.

18. Wasser-Abrasiv-Suspensions-Schneidanlage (1) nach einem der vorhergehenden Ansprüche, wobei der Ventileingang (49) an einer Oberseite und der Ventilausgang (51) an einer Unterseite des Nachfüllventils (19) angeordnet sind, wobei die Schleusenkammer (21) oberhalb des Nachfüllventils (19) und der Druckbehälter (11) unterhalb des Nachfüllventils (19) angeordnet ist, sodass Abrasivmittel schwerkraftunterstützt oder schwerkraftbetrieben durch das Nachfüllventil (19) strömen kann.

## Claims

1. A water-abrasive suspension cutting facility (1) with
- a pressure tank for providing (301) a water-abrasive agent suspension (13) which is under pressure
- a lock chamber (21), and
- a refilling valve (19) for refilling abrasive agent into the pressure tank (11) via the lock chamber (21), wherein the refilling valve (19) comprises a valve entry (49), a valve exit (51), a valve space (71) which is arranged between the valve entry (49) and the valve exit (51), and a valve body (67) which is located in the valve space (71), wherein the valve entry (49) is connected to the lock chamber (21) and the valve exit (51) to the pressure tank (11), **characterised in that**
the refilling valve (19) comprises a first closure position, a first open position and a second open position, wherein in the first closure position the lock chamber (21) is fluid-separated from the pressure tank (11) and in the first as well as a second open position the lock chamber (21) is fluid-connected to the pressure tank (11), wherein the valve space (71) comprises a pressure inlet (53), which is connected to a bypass of a pressure conduit, with which the pressure tank (11) and/or the lock chamber (21) is also pressurized, wherein the valve space (71) in the closure position of the valve body (67) is pressurizable via the pressure inlet (53) to reduce a pressure difference between the valve space (71) and the valve inlet (49) and/or valve outlet (51).

2. A water-abrasive suspension cutting facility (1) according to claim 1, wherein the valve body (67) can be brought from the first closure position into the first open position via a rotation in a first direction and into the second open position via a rotation in a second direction.

3. A water-abrasive suspension cutting facility (1) according to claim 2, wherein the valve body (67) comprises a second closure position, wherein the valve body (67) can be brought from the second closure position into the second open position via a rotation in the first direction and into the first open position via a rotation in the second direction.

4. A water-abrasive suspension cutting facility (1) according to claim 2 or 3, wherein the valve body (67) can be brought from the first open position into the second open position by way of a 180° rotation.

5. A water-abrasive suspension cutting facility (1) according to one of the preceding claims, wherein the refilling valve (19) is a ball cock, wherein the valve body (67) is essentially spherical with an axial through-hole (69), wherein the valve entry (49) and the valve exit (51) are arranged on diametrically opposite sides of the valve body (67), wherein the axial through-hole (69) lies coaxially to the valve entry (49) and the valve exit (51) in the first and the second open position.

6. A water-abrasive suspension cutting facility (1) according to claim 5, wherein the valve body (67) is rotatable about a rotation axis (R) which is essentially perpendicular to the axial through-hole (69).

7. A water-abrasive suspension cutting facility (1) according to one of the preceding claims, wherein the valve body (67) is controllably drivable via a motor.

8. A water-abrasive suspension cutting facility (1) according to claim 7, wherein a drive direction and/or a drive speed and/or a drive moment of the motor are regulated depending on a torque which is required for driving the valve body (67) or on at least one parameter which correlates with the required torque.

9. A water-abrasive suspension cutting facility (1) according to claim 8, wherein a power consumption of the motor is one of the at least one parameter which correlates with the required torque.

10. A water-abrasive suspension cutting facility (1) according to one of the preceding claims 7 to 9, wherein the motor is regulated in a manner such that the drive direction is changed on exceeding a threshold value for a torque which is required for driving the valve body (67) or on exceeding a threshold value for at least one parameter which correlates with the required torque.

11. A water-abrasive suspension cutting facility (1) according to one of the preceding claims 7 to 10, wherein the refilling valve (19) comprises a second closure position between the second open position and the first open position, wherein the motor is regulated in a manner such that the drive direction remains the same when a threshold value for the torque which is required for driving the valve body (67) is not exceeded or a threshold value for at least one parameter which correlates with the required torque is not exceeded.

12. A water-abrasive suspension cutting facility (1) according to one of the preceding claims 7 to 11, with a monitoring unit which is designed to monitor a torque which is required for driving the valve body (67) or at least one parameter which correlates with the required torque, over at least one time window in a continuous or discrete manner, in order to recognise wearing or to indicate an error occurrence or a service case.

13. A water-abrasive suspension cutting facility (1) according to one of the preceding claims, wherein the valve space (71) comprises a purge inlet (53) and a purge outlet (63), via which the valve space (71) is purgeable.

14. A water-abrasive suspension cutting facility (1) according to claim 13, wherein the purge outlet (63) is closable by a purge outlet valve (59) and the valve space (71) is pressurizable via the purge inlet (53) when the purge outlet valve (59) is closed.

15. A water-abrasive suspension cutting facility (1) according to one of the preceding claims, wherein the refilling valve (19) comprises an entry-side valve seat (73) and an exit-side valve seat (75), wherein at least one of the valve seats (73, 75) is adjustable so that the distance of the valve seats (73, 75) to one another can be adjusted.

16. A water-abrasive suspension cutting facility (1) according to claim 15, wherein refilling valve (19) comprises a tool opening, through which a tool can engage, in order to adjust the at least one adjustable valve seat (73, 75).

17. A water-abrasive suspension cutting facility (1) according to claim 16, wherein the at least one adjustable valve seat (73, 75) is rotatable via a lever or key which is introduced through the tool opening, and is hence axially adjustable via a thread.

18. A water-abrasive suspension cutting facility (1) according to one of the preceding claims, wherein the valve entry (49) is arranged at an upper side and the valve exit (51) at a lower side of the refilling valve (19), wherein the lock chamber (21) is arranged above the refilling valve (19) and the pressure tank (11) below the refilling valve (19), so that abrasive agent can flow through the refilling valve (19) assisted or driven by gravity.

## Revendications

1. Installation de coupe en suspension aqueuse abrasive (1), comprenant
- un réservoir sous pression (11), destiné à mettre à disposition (301) une suspension aqueuse d'agent abrasif (13) sous pression,
- un sas (21) et
- une vanne de recharge (19), destinée à recharger de l'agent abrasif par l'intermédiaire d'un sas (21) dans le réservoir sous pression (11), la vanne de recharge (19) comportant une entrée (49) de vanne, une sortie (51) de vanne, une chambre de vanne (71) placée entre l'entrée (49) de vanne et la sortie (51) de vanne et un corps de vanne (67) se trouvant dans la chambre de vanne (71), l'entrée (49) de vanne étant reliée avec le sas (21) et la sortie (51) de vanne étant reliée avec le réservoir sous pression (11), **caractérisée en ce que**
la vanne de recharge (19) comporte une première position de fermeture, une première position d'ouverture et une deuxième position d'ouverture, dans la première position de fermeture, le sas (21) étant fluidiquement séparé du réservoir sous pression (11) et dans la première, ainsi que dans la deuxième position d'ouverture, le sas (21) étant fluidiquement relié avec le réservoir sous pression (11), la chambre de vanne (71) comportant une entrée de pression (53) qui est reliée avec une dérivation d'une conduite sous pression, mettant sous pression également le réservoir sous pression (11) et / ou le sas (21), dans la position de fermeture du corps de vanne (67), la chambre de vanne (71) étant susceptible d'être mise sous pression par l'intermédiaire de l'entrée de pression (53) pour réduire une pression différentielle entre la chambre de vanne (71) et l'entrée (49) de vanne et / ou la sortie (51) de vanne.

2. Installation de coupe en suspension aqueuse abrasive (1) selon la revendication 1, le corps de vanne (67) étant transférable de la première position de fermeture dans la première position d'ouverture via une rotation dans une première direction et dans la deuxième position d'ouverture via une rotation dans une deuxième direction.

3. Installation de coupe en suspension aqueuse abrasive (1) selon la revendication 2, le corps de vanne (67) comportant une deuxième position de fermeture, le corps de vanne (67) étant transférable de la deuxième position de fermeture dans la deuxième position d'ouverture via une rotation dans la première direction et dans la première position d'ouverture via une rotation dans la deuxième direction.

4. Installation de coupe en suspension aqueuse abrasive (1) selon la revendication 2 ou 3, le corps de vanne (67) étant transférable par une rotation à 180 °de la première position d'ouverture dans la deuxième position d'ouverture.

5. Installation de coupe en suspension aqueuse abrasive (1) selon l'une quelconque des revendications précédentes, la vanne de recharge (19) étant une vanne à bille, le corps de vanne (67) étant sensiblement en forme de bille avec un ajour (69) axial, l'entrée (49) de vanne et la sortie (51) de vanne étant placées sur des côtés diamétralement opposés du corps de vanne (67), dans la première et la deuxième position d'ouverture, l'ajour (69) axial se situant de manière coaxiale par rapport à l'entrée (49) de vanne et à la sortie (51) de vanne.

6. Installation de coupe en suspension aqueuse abrasive (1) selon la revendication 5, le corps de vanne (67) étant rotatif autour d'un axe de rotation (R) sensiblement perpendiculaire à l'ajour (69) axial.

7. Installation de coupe en suspension aqueuse abrasive (1) selon l'une quelconque des revendications précédentes, le corps de vanne (67) étant susceptible d'être entraîné sous la commande d'un moteur.

8. Installation de coupe en suspension aqueuse abrasive selon la revendication 7, une direction d'entraînement et / ou une vitesse d'entraînement et / ou un couple d'entraînement du moteur étant réglés en fonction d'un couple de rotation nécessité pour l'entraînement du corps de vanne (67) ou d'au moins un paramètre en corrélation avec le couple de rotation nécessité.

9. Installation de coupe en suspension aqueuse abrasive (1) selon la revendication 8, une puissance absorbée du moteur étant l'un des au moins un paramètre en corrélation avec le couple de rotation nécessité.

10. Installation de coupe en suspension aqueuse abrasive (1) selon l'une quelconque des revendications 7 à 9, le moteur étant réglé de telle sorte que lors d'un dépassement d'une valeur seuil pour un couple de rotation nécessité pour l'entraînement du corps de vanne (67) ou d'une valeur seuil pour au moins un paramètre en corrélation avec le couple de rotation nécessité, la direction d'entraînement est modifiée.

11. Installation de coupe en suspension aqueuse abrasive (1) selon l'une quelconque des revendications 7 à 10, la vanne de recharge (19) comportant une deuxième position de fermeture entre la deuxième position d'ouverture et la première position d'ouverture, le moteur étant réglé de telle sorte que lors d'un non-dépassement d'une valeur seuil pour le couple de rotation nécessité pour l'entraînement du corps de vanne (67) ou d'une valeur seuil pour au moins un paramètre en corrélation avec le couple de rotation nécessité, la direction d'entraînement reste telle qu'elle.

12. Installation de coupe en suspension aqueuse abrasive (1) selon l'une quelconque des revendications 7 à 11, pourvue d'une unité de supervision qui est conçue pour superviser en continu ou de manière discrète un couple de rotation nécessité pour l'entraînement du corps de vanne (67) ou au moins un paramètre en corrélation avec le couple de rotation nécessité sur au moins une fenêtre de temps, pour identifier une usure ou signaler un cas de défaut ou de maintenance.

13. Installation de coupe en suspension aqueuse abrasive (1) selon l'une quelconque des revendications précédentes, la chambre de vanne (71) comportant une entrée (53) de rinçage et une sortie (63) de rinçage par l'intermédiaire desquelles la chambre de vanne (71) peut être rincée.

14. Installation de coupe en suspension aqueuse abrasive selon la revendication 13, la sortie (63) de rinçage pouvant se fermer par l'intermédiaire d'une soupape de sortie (59) de rinçage et la chambre de vanne (71) étant susceptible d'être mise sous pression par l'intermédiaire de l'entrée (53) de rinçage lorsque la soupape de sortie (59) de rinçage est fermée.

15. Installation de coupe en suspension aqueuse abrasive (1) selon l'une quelconque des revendications précédentes, la vanne de recharge (19) comportant un siège de vanne (73) côté entrée et un siège de vanne (75) côté sortie, au moins l'un des sièges de vanne (73, 75) étant ajustable, de telle sorte que l'écart mutuel entre les sièges de vanne (73, 75) soit réglable.

16. Installation de coupe en suspension aqueuse abrasive (1) selon la revendication 15, la vanne de recharge (19) comportant un orifice d'outil, à travers lequel un outil peut s'engager, pour régler l'au moins un siège de vanne (73, 75) ajustable.

17. Installation de coupe en suspension aqueuse abrasive (1) selon la revendication 16, l'au moins un siège de vanne (73, 75) ajustable étant ajustable en rotation par un levier ou une clé introduit (e) à travers l'orifice pour outil et ainsi en direction axiale par l'intermédiaire d'un filetage.

18. Installation de coupe en suspension aqueuse abrasive (1) selon l'une quelconque des revendications précédentes, l'entrée (49) de vanne étant placée sur une face supérieure et la sortie (51) de vanne étant placée sur une face inférieure de la vanne de recharge (19), le sas (21) étant placé au-dessus de la vanne de recharge (19) et le réservoir sous pression (11) étant placé en-dessous de la vanne de recharge (19), de telle sorte qu'avec l'assistance de la force de gravité ou sous l'action de la force de gravité, de l'agent abrasif puisse circuler à travers la vanne de recharge (19).
